# EUROPEAN PATENT APPLICATION

(11) **EP 4 539 377 A1**
(43) Date of publication of application: **16.04.2025**
(21) Application number: 23834753.8
(22) Date of filing: 30.06.2023
(51) Int. Cl.: H04L 5/00, H04W 24/02, H04W 24/08

(54) **COMMUNICATION METHOD AND COMMUNICATION APPARATUS**

(30) Priority: 04.07.2022 CN 202210786578; 12.07.2022 CN 202210817188
(71) Applicant: Huawei Technologies Co., Ltd., Shenzhen, Guangdong 518129 (CN)
(72) Inventor: FAN, Liangliang, Shenzhen, Guangdong 518129 (CN); XU, Haibo, Shenzhen, Guangdong 518129 (CN); XUE, Lixia, Shenzhen, Guangdong 518129 (CN); ZHENG, Lili, Shenzhen, Guangdong 518129 (CN)
(74) Representative: Thun, Clemens
(86) International application number: PCT/CN2023/104687
(87) International publication number: WO 2024/007986

(57) **Abstract**

This application provides a communication method and a communication apparatus. The method includes: When obtaining measurement configuration information, a terminal device may directly obtain NTN parameter information needed for measurement or determine the NTN parameter information based on indication information. Further, the terminal device performs measurement based on the measurement configuration information and the NTN parameter information. The terminal device may supplement or adjust, based on ephemeris information in the NTN parameter information, an offset that is of a measurement frequency, measurement time, or the like and that is caused by movement of a satellite, to ensure that searching and measurement can be performed more quickly and accurately, thereby satisfying a communication latency requirement and improving measurement precision.

## Description

This application claims priorities to Chinese Patent Application No. 202210786578.9, filed with the China National Intellectual Property Administration on July 4, 2022 and entitled "COMMUNICATION METHOD AND COMMUNICATION APPARATUS", and to Chinese Patent Application No. 202210817188.3, filed with the China National Intellectual Property Administration on July 12, 2022 and entitled "COMMUNICATION METHOD AND COMMUNICATION APPARATUS", both of which are incorporated herein by reference in their entireties.

### TECHNICAL FIELD

This application relates to the field of communication technologies, and more specifically, to a communication method and a communication apparatus.

### BACKGROUND

Nowadays, a satellite network is a global hot topic in research, and satellite communication technologies have been increasingly mature. For example, a non-terrestrial network (non-terrestrial network, NTN) is a network or network segment that uses radio frequencies on board a satellite for communication, and can provide wider coverage. In addition, a satellite base station is not vulnerable to natural disasters or external force.

In the NTN network, since an NTN cell has wide coverage, terminal devices are subject to dynamic movement of the satellite. For example, high-speed movement of the satellite causes receiving timing and a receiving frequency of the terminal device to vary with time.

In this case, how to improve precision of measuring a measurement object by the terminal device becomes a problem worthy of attention.

### SUMMARY

This application provides a communication method and apparatus, so that a terminal device can measure a measurement object based on measurement configuration information and related NTN parameter information, thereby improving measurement precision and satisfying a communication latency requirement.

According to a first aspect, a communication method is provided. The method may be performed by a terminal device, or may be performed by a chip or a circuit configured in the terminal device. This is not limited in this application.

The method includes: The terminal device obtains first configuration information, where the first configuration information includes non-terrestrial network NTN parameter information, and the NTN parameter information includes parameter information needed by the terminal device to perform measurement on a carrier frequency. The terminal device performs measurement on the carrier frequency based on the first configuration information and measurement configuration information, where the measurement configuration information indicates configuration information of the measurement to be performed by the terminal device, and the measurement configuration information and the first configuration information correspond to a same measurement object.

Based on the foregoing technical solution, when obtaining the measurement configuration information, the terminal device may also directly obtain the NTN parameter information needed for the measurement or determine the NTN parameter information based on indication information. Further, the terminal device performs measurement based on the measurement configuration information and the NTN parameter information. The terminal device may supplement or adjust, based on ephemeris information in the NTN parameter information, an offset that is of a measurement frequency, measurement time, or the like and that is caused by movement of a satellite, to ensure that searching and measurement can be performed more quickly and accurately, thereby satisfying a communication latency requirement and improving measurement precision.

In this application, the NTN parameter information includes parameter information that is needed by the terminal device to perform measurement on the carrier frequency and that is about accessing an NTN network by the terminal device, and the parameter information may be the ephemeris information.

In this application, the terminal device measures a cell on a carrier frequency of the cell.

In this application, the measurement configuration information indicates the configuration information of the measurement to be performed by the terminal device.

In this application, the configuration information of the measurement to be performed by the terminal device may include measurement configuration information such as intra-frequency measurement configuration information, inter-frequency measurement configuration information, inter-RAT measurement configuration information, or measurement gap configuration information.

With reference to the first aspect, in a possible implementation, that the terminal device obtains the first configuration information includes: The terminal device receives first information, where the first information includes the first configuration information and the measurement configuration information.

In this technical solution, the terminal device may simultaneously obtain the first configuration information when obtaining the measurement configuration information, thereby reducing signaling overheads.

With reference to the first aspect, in a possible implementation, the terminal device receives second information, where the second information includes the measurement configuration information and first indication information, and the first indication information indicates a location for carrying the first configuration information. The terminal device determines the first configuration information based on the first indication information.

In this technical solution, the terminal device may determine the first configuration information based on indication information sent by a network device, and further use the first configuration information for the measurement.

With reference to the first aspect, in a possible implementation, the terminal device determines, based on the first indication information, a system information block and/or index information in which the first configuration information is located. The terminal device determines the first configuration information in third information based on the system information block and/or the index information, where the third information includes the first configuration information.

In this technical solution, the first indication information may indicate the location or a specific bearer resource of the first configuration information, and the terminal device may determine the first configuration information based on the first indication information.

With reference to the first aspect, in a possible implementation, the terminal device receives the third information, where the third information further includes carrier frequency information and/or cell identification information.

In this technical solution, the terminal device receives the third information from the network device, to further determine the first configuration information in the third information based on the indication information.

With reference to the first aspect, in a possible implementation, the first configuration information further includes the cell identification information and/or a first configuration information index, the first configuration information index indicates NTN parameter information corresponding to a cell, and the cell identification information corresponds to the first configuration information index.

In this technical solution, when the first configuration information includes NTN parameter information corresponding to a plurality of cells, the NTN parameter information corresponding to the cells may be determined based on the first configuration information index.

With reference to the first aspect, in a possible implementation, the first configuration information further includes the carrier frequency information and/or a first configuration information index, the first configuration information index indicates NTN parameter information corresponding to the carrier frequency information, and the carrier frequency information corresponds to the first configuration information index.

In this technical solution, when the first configuration information includes NTN parameter information corresponding to a plurality of cells, NTN parameter information corresponding to carrier frequencies of the cells may be determined based on the first configuration information index.

It should be understood that there is an association relationship between the first configuration information and the carrier frequency.

It should be understood that there is a correspondence between the first configuration information and the cell. That is, at least one cell found on a corresponding carrier frequency through searching may be measured by using one set of NTN parameter information. In other words, different cells may correspond to different NTN parameter information, or different cells may correspond to a same set of NTN parameter information.

Optionally, the first configuration information further includes the carrier frequency information, and there is a correspondence between the carrier frequency and the first configuration information. That is, the first configuration information is for performing measurement on the carrier frequency.

Optionally, the first configuration information further includes the first configuration information index, and there is a correspondence between the cell and the first configuration information index. That is, the first configuration information index indicates the NTN parameter information corresponding to the different cells.

Optionally, the first configuration information further includes the cell identification information or a cell identification information list. There is a correspondence between the cell identification information or the cell identification information list and the first configuration information. That is, the cell identification information or the cell identification information list may indicate the cell corresponding to the first configuration information.

Optionally, the cell identification information may be a physical cell ID.

Optionally, when adding, modifying, or deleting the cell on the carrier frequency, the network device accordingly modifies the first configuration information corresponding to the cell.

With reference to the first aspect, in a possible implementation, the terminal device receives second configuration information, where the second configuration information includes NTN parameter information, the NTN parameter information includes parameter information needed by the terminal device to perform measurement on the carrier frequency, the second configuration information is used by the terminal device to perform measurement on the carrier frequency within first duration, the first duration is a time length that exceeds validity duration of the first configuration information, and the validity duration is longest time within which the terminal device performs measurement by using the first configuration information.

In this technical solution, in the movement of the satellite, movement parameter information such as a speed, a location, and a trajectory dynamically varies. Therefore, the NTN parameter information needs to be updated, to ensure that the provided ephemeris information is more accurate, and ensure that the terminal device can perform searching and measurement more quickly and accurately. Therefore, after the validity duration of the first configuration information is exceeded, the updated second configuration information needs to be used to continue the measurement, to ensure measurement accuracy and satisfy a communication latency requirement.

It may be understood that, when the network device and the terminal device are in a connected state, the network device may determine that the validity duration of the first configuration information has been exceeded. Therefore, the network device may send the second configuration information to the terminal device. However, when the network device is in an idle state or an inactive state, the network device may not be capable of determining the validity duration of the first configuration information. In this scenario, the network device may not be capable of sending the second configuration information to the terminal device in time.

Optionally, the validity duration configured by a network for the first configuration information indicates longest time within which the UE can use the first configuration information when the UE does not obtain new assistance information (satellite ephemeris information, a TA parameter, and the like).

Optionally, when the network device may determine that validity time of the NTN parameter information (the first configuration information) needed by the terminal device for the measurement expires, the network device may reconfigure, for the terminal device, the NTN parameter information (the second configuration information) needed for the measurement.

Optionally, the network device reconfigures the second configuration information for the terminal device before the validity time expires.

Optionally, for example, the network device may determine the validity time based on parameters such as a movement speed and an orbit height of the satellite. This is not limited in this embodiment of this application.

Optionally, the network device may send the second configuration information via a broadcast message, or may send the second configuration information via a dedicated signaling message.

In this application, the terminal device receives the new NTN parameter information (the second configuration information), and performs measurement based on the new NTN parameter information and the measurement configuration information.

With reference to the first aspect, in a possible implementation, the terminal device receives the first information, where the first information includes the first configuration information and the measurement configuration information, the first configuration information includes the non-terrestrial network NTN parameter information, the NTN parameter information includes the parameter information needed by the terminal device to perform measurement on the carrier frequency, and the measurement configuration information and the first configuration information correspond to the same measurement object. The terminal device performs measurement on the carrier frequency based on the first configuration information and the measurement configuration information.

With reference to the first aspect, in a possible implementation, the terminal device receives the second information, where the second information includes the measurement configuration information and the first indication information. The terminal device determines the first configuration information based on the first indication information, where the first configuration information includes the non-terrestrial network NTN parameter information, and the NTN parameter information includes the parameter information needed by the terminal device to perform measurement on the carrier frequency. The terminal device performs measurement on the carrier frequency based on the first configuration information and the measurement configuration information, where the measurement configuration information and the first configuration information correspond to the same measurement object.

With reference to the first aspect, in a possible implementation, the terminal device obtains the first configuration information, where the first configuration information includes the non-terrestrial network NTN parameter information, and the NTN parameter information includes the parameter information needed by the terminal device to perform measurement on the carrier frequency. The terminal device performs measurement on the carrier frequency based on the first configuration information and intra-frequency/inter-frequency/inter-RAT measurement configuration information, where the intra-frequency or inter-frequency measurement configuration information and the first configuration information correspond to a same measurement object.

In this application, in the idle state or the inactive state, the network device sends the intra-frequency measurement configuration information, the inter-frequency measurement configuration information, or the inter-RAT measurement configuration information via a broadcast message. In addition, the broadcast message may further carry the first indication information. The terminal device determines, based on the first indication information, the system information block and/or the index information in which the first configuration information is located. The terminal device further determines the first configuration information in the third information based on the system information block and/or the index information in which the first configuration information is located, where the third information is information that is sent by the network device via a broadcast message and that includes the first configuration information.

According to a second aspect, a communication method is provided. The method may be performed by a network device or a chip or a circuit configured in the network device. This is not limited in this application.

The method includes: The network device determines first configuration information based on measurement configuration information, where the first configuration information includes non-terrestrial network NTN parameter information, the NTN parameter information includes parameter information needed by a terminal device to perform measurement on a carrier frequency, and the measurement configuration information indicates configuration information of the measurement to be performed by the terminal device. The network device sends the first configuration information and the measurement configuration information, where the first configuration information and the measurement configuration information are used by the terminal device to perform measurement on the carrier frequency, and the measurement configuration information and the first configuration information correspond to a same measurement object.

Based on the foregoing technical solution, when sending the measurement configuration information to the terminal device, the network device may directly send the NTN parameter information needed for the measurement or simultaneously send indication information to indicate a location of the NTN parameter information, so that the terminal device can directly obtain the NTN parameter information. Further, the terminal device performs measurement based on the measurement configuration information and the NTN parameter information. The terminal device may supplement or adjust, based on ephemeris information in the NTN parameter information, an offset that is of a measurement frequency, measurement time, or the like and that is caused by movement of a satellite, to ensure that searching and measurement can be performed more quickly and accurately, thereby satisfying a communication latency requirement and improving measurement precision.

In this application, the NTN parameter information includes parameter information that is needed by the terminal device to perform measurement on the carrier frequency and that is about accessing an NTN network by the terminal device, and the parameter information may be the ephemeris information.

In this application, the terminal device measures a cell on a carrier frequency of the cell.

In this application, the measurement configuration information indicates the configuration information of the measurement to be performed by the terminal device.

In this application, the configuration information of the measurement to be performed by the terminal device may include measurement configuration information such as intra-frequency measurement configuration information, inter-frequency measurement configuration information, inter-RAT measurement configuration information, or measurement gap configuration information.

With reference to the second aspect, in a possible implementation, the network device sends first information, where the first information includes the first configuration information and the measurement configuration information.

In this technical solution, the network device may simultaneously send the first configuration information when configuring the measurement configuration information, thereby reducing signaling overheads.

With reference to the second aspect, in a possible implementation, the network device sends second information, where the second information includes the measurement configuration information and first indication information, the first indication information indicates a location for carrying the first configuration information, and the first indication information is used by the terminal device to determine the first configuration information.

In this technical solution, the network device may indicate the location of the first configuration information by using indication information, so that the terminal device determines the first configuration information for the measurement.

With reference to the second aspect, in a possible implementation, the first indication information indicates a system information block and/or index information in which the first configuration information is located in third information.

In this technical solution, the first indication information may indicate the location or a specific bearer resource of the first configuration information, and the terminal device may determine the first configuration information based on the first indication information.

With reference to the second aspect, in a possible implementation, the network device sends the third information, where the third information further includes cell identification information and/or carrier frequency information of a cell.

In this technical solution, the network device sends the third information to the terminal device, so that the terminal device determines the first configuration information in the third information based on the indication information.

With reference to the second aspect, in a possible implementation, the first configuration information further includes the cell identification information and/or a first configuration information index, the first configuration information index indicates NTN parameter information corresponding to the cell, and the cell identification information corresponds to the first configuration information index.

In this technical solution, when the first configuration information includes NTN parameter information corresponding to a plurality of cells, the NTN parameter information corresponding to the cells may be determined based on the first configuration information index.

With reference to the second aspect, in a possible implementation, the first configuration information further includes the carrier frequency information and/or a first configuration information index, the first configuration information index indicates NTN parameter information corresponding to the carrier frequency information, and the carrier frequency information corresponds to the first configuration information index.

In this technical solution, when the first configuration information includes NTN parameter information corresponding to a plurality of cells, NTN parameter information corresponding to carrier frequencies of the cells may be determined based on the first configuration information index.

It should be understood that there is an association relationship between the first configuration information and the carrier frequency.

It should be understood that there is a correspondence between the first configuration information and the cell. That is, at least one cell found on a corresponding carrier frequency through searching may be measured by using one set of NTN parameter information. In other words, different cells may correspond to different NTN parameter information, or different cells may correspond to a same set of NTN parameter information.

Optionally, the first configuration information further includes the carrier frequency information, and there is a correspondence between the carrier frequency and the first configuration information. That is, the first configuration information is for performing measurement on the carrier frequency.

Optionally, the first configuration information further includes the first configuration information index, and there is a correspondence between the cell and the first configuration information index. That is, the first configuration information index indicates the NTN parameter information corresponding to the different cells.

Optionally, the first configuration information further includes the cell identification information or a cell identification information list. There is a correspondence between the cell identification information or the cell identification information list and the first configuration information. That is, the cell identification information or the cell identification information list may indicate the cell corresponding to the first configuration information.

Optionally, the cell identification information may be a physical cell ID.

Optionally, when adding, modifying, or deleting the cell on the carrier frequency, the network device accordingly modifies the first configuration information corresponding to the cell.

With reference to the second aspect, in a possible implementation, the network device sends second configuration information, where the second configuration information includes NTN parameter information of at least one cell on different carrier frequencies, the NTN parameter information includes parameter information used by the terminal device to access the at least one cell through an NTN, the second configuration information is used by the terminal device to measure the at least one cell within first duration, the first duration is a time length that exceeds validity duration of the first configuration information, and the validity duration is longest time within which the terminal device performs measurement by using the first configuration information.

In this technical solution, in the movement of the satellite, movement parameter information such as a speed, a location, and a trajectory dynamically varies. Therefore, the NTN parameter information needs to be updated, to ensure that the provided ephemeris information is more accurate, and ensure that the terminal device can perform searching and measurement more quickly and accurately. Therefore, after the validity duration of the first configuration information is exceeded, the updated second configuration information needs to be used to continue the measurement, to ensure measurement accuracy and satisfy a communication latency requirement.

It may be understood that, when the network device and the terminal device are in a connected state, the network device may determine that the validity duration of the first configuration information has been exceeded. Therefore, the network device may send the second configuration information to the terminal device. However, when the network device is in an idle state or an inactive state, the network device may not be capable of determining the validity duration of the first configuration information. In this scenario, the network device may not be capable of sending the second configuration information to the terminal device in time.

Optionally, the validity duration configured by a network for the first configuration information indicates longest time within which the UE can use the first configuration information when the UE does not obtain new assistance information (satellite ephemeris information, a TA parameter, and the like).

Optionally, when the network device may determine that validity time of the NTN parameter information (the first configuration information) needed by the terminal device for the measurement expires, the network device may reconfigure, for the terminal device, the NTN parameter information (the second configuration information) needed for the measurement.

Optionally, the network device reconfigures the second configuration information for the terminal device before the validity time expires.

Optionally, for example, the network device may determine the validity time based on parameters such as a movement speed and an orbit height of the satellite. This is not limited in this embodiment of this application.

Optionally, the network device may send the second configuration information via a broadcast message, or may send the second configuration information via a dedicated signaling message.

In this application, the terminal device receives the new NTN parameter information (the second configuration information), and performs measurement based on the new NTN parameter information and the measurement configuration information.

According to a third aspect, a communication method is provided. The method may be performed by a network device, or may be performed by a chip or a circuit configured in the network device. This is not limited in this application.

The method includes: The network device determines second configuration information based on first configuration information, where the first configuration information includes a cell-specific parameter of a target cell to be accessed by a terminal device, and the second configuration information includes parameter information used by the terminal device to access the to-be-accessed target cell through a non-terrestrial network NTN. The network device sends the first configuration information, the second configuration information, and first information, where the first information indicates the terminal device to receive the first configuration information and the second configuration information, and the first configuration information and the second configuration information are used by the terminal device to access the to-be-accessed target cell.

According to this technical solution, the network device (a source network device) indicates the terminal device to receive common information (the first configuration information) of the to-be-accessed cell under a reasonable condition (a proper time, a proper location, or the like), and the terminal device accesses the to-be-accessed target cell based on the common information and the second configuration information, so that a quantity of times the terminal receives the common information of the cell and an amount of the common information can be reduced, and power consumption overheads of the terminal can be reduced.

In this application, the first configuration information includes common configuration information for the target cell to be accessed by the terminal device, and the common configuration information includes the cell-specific parameter of the target cell to be accessed by the terminal device.

It may be understood that the common configuration information may be the same when different terminal devices access a same target network device, and the common configuration information is usually different when different terminal devices access different target network devices.

Optionally, the first information further includes cell-specific configuration information.

Optionally, after receiving the first configuration information and the second configuration information based on the first information, the terminal device receives the cell-specific configuration information.

It may be understood that the cell-specific configuration information is different for the different target network devices.

With reference to the third aspect, in a possible implementation, the first information includes a first condition, and the first condition indicates the terminal device to receive the first configuration information and the second configuration information.

In this technical solution, the network device indicates a specific condition to the terminal device, so that the terminal device determines whether the condition is satisfied, to receive the first configuration information.

With reference to the third aspect, in a possible implementation, the first condition is that a current moment of the terminal device is prior to a first start moment, the first start moment is a start moment of a first time period, and the first time period is a time period in which the terminal device switches from a current serving cell of the network device to the to-be-accessed target cell.

In this technical solution, the network device indicates the terminal device to receive the first configuration information when the terminal device determines that current time is prior to start time of the first time period.

With reference to the third aspect, in a possible implementation, the first condition is that a difference between a first offset value and a distance between the terminal device and a first reference point is greater than a first threshold or that a sum of a second offset value and a distance between the terminal device and a second reference point is less than a second threshold, the first reference point is a location within coverage of a current serving cell of the terminal device, the current serving cell is a cell within coverage of the network device, and the second reference point is a location within coverage of the target cell to be accessed by the terminal device.

In this technical solution, the network device indicates the terminal device to receive the first configuration information when the terminal device determines that a current location satisfies a location condition.

The first offset value and the second offset value are hysteresis parameters, and the hysteresis parameter is a maximum value of an allowed error.

With reference to the third aspect, in a possible implementation, the first information includes first indication information, and the first indication information indicates the terminal device to receive the first configuration information and the second configuration information.

In this technical solution, the network device directly indicates, by using indication information, the terminal device to receive the first configuration information.

With reference to the third aspect, in a possible implementation, the first information includes first time information, the first time information indicates time at/within which the network device sends the first configuration information and time at/within which the network device sends the second configuration information, the first time information is used by the terminal device to receive the first configuration information at/within the time at/within which the network device sends the first configuration information and receive the second configuration information at/within the time at/within which the network device sends the second configuration information.

In this technical solution, the network device indicates, by indicating specific time information, the terminal device to receive the first configuration information at/within the corresponding time.

Optionally, the first information includes a handover command message.

Optionally, the network device sends the first information before sending the handover command message to the terminal device.

Optionally, the first time information may be represented by using offset time. For example, the first time information is represented by using an offset value of reference time. The reference time may be cell service end time.

Optionally, the first time information may be represented by using absolute time.

Optionally, the first time information may be represented by using a system frame and a subframe.

According to a fourth aspect, a communication method is provided. The method may be performed by a terminal device, or may be performed by a chip or a circuit configured in the terminal device. This is not limited in this application.

The method includes: The terminal device receives first information. The terminal device receives first configuration information and second configuration information based on the first information, where the first configuration information includes a cell-specific parameter of a target cell to be accessed by the terminal device, the second configuration information includes parameter information used by the terminal device to access the to-be-accessed target cell through a non-terrestrial network NTN, and the first configuration information and the second configuration information are used by the terminal device to access the to-be-accessed target cell.

According to this technical solution, the terminal device may receive common information of the to-be-accessed cell under a reasonable condition (appropriate time, an appropriate location, or the like) based on an indication of a network device (a source network device), so that a quantity of times the terminal receives the common information of the cell and an amount of the common information can be reduced, and power consumption overheads of the terminal can be reduced.

In this application, the first configuration information includes common configuration information for the target cell to be accessed by the terminal device, and the common configuration information includes the cell-specific parameter of the target cell to be accessed by the terminal device.

It may be understood that the common configuration information may be the same when different terminal devices access a same target network device, and the common configuration information is usually different when different terminal devices access different target network devices.

Optionally, the first information further includes cell-specific configuration information.

Optionally, after receiving the first configuration information and the second configuration information based on the first information, the terminal device receives the cell-specific configuration information.

It may be understood that the cell-specific configuration information is different for the different target network devices.

With reference to the fourth aspect, in a possible implementation, the terminal device determines a first condition based on the first information. The terminal device determines, based on the first condition, to receive the first configuration information and the second configuration information.

In this technical solution, the network device indicates a specific condition to the terminal device, so that the terminal device determines whether the condition is satisfied, to receive the first configuration information.

With reference to the fourth aspect, in a possible implementation, the terminal device determines that the first condition is that a current moment of the terminal device is prior to a start moment of a first time period, where the first time period is a time period in which the terminal device switches from a current serving cell of a network device to the to-be-accessed target cell. The terminal device receives the first configuration information and the second configuration information at the current moment.

In this technical solution, the network device indicates the terminal device to receive the first configuration information when the terminal device determines that current time is prior to start time of the first time period.

With reference to the fourth aspect, in a possible implementation, the terminal device determines that the first condition is that a difference between a first offset value and a distance between the terminal device and a first reference point is greater than a first threshold or that a sum of a second offset value and a distance between the terminal device and a second reference point is less than a second threshold, where the first reference point is a location within coverage of a current serving cell of the terminal device, the current serving cell is a cell within coverage of a network device, the second reference point is a location within coverage of the target cell to be accessed by the terminal device, the first offset value and the second offset value are hysteresis parameters, and the hysteresis parameter is a maximum value of an allowed error. The terminal device receives the first configuration information and the second configuration information at a current location.

In this technical solution, the network device indicates the terminal device to receive the first configuration information when the terminal device determines that a current location satisfies a location condition.

With reference to the fourth aspect, in a possible implementation, the terminal device determines first indication information based on the first information. The terminal device receives the first configuration information and the second configuration information based on the first indication information.

In this technical solution, the network device directly indicates, by using indication information, the terminal device to receive the first configuration information.

With reference to the fourth aspect, in a possible implementation, the terminal device determines first time information based on the first information, where the first time information indicates time at/within which a network device sends the first configuration information and time at/within which the network device sends the second configuration information. The terminal device receives the first configuration information at/within the time at/within which the network device sends the first configuration information, and receives the second configuration information at/within the time at/within which the network device sends the second configuration information.

In this technical solution, the network device indicates, by indicating specific time information, the terminal device to receive the first configuration information at/within the corresponding time.

Optionally, the first information includes a handover command message.

Optionally, the network device sends the first information before sending the handover command message to the terminal device.

Optionally, the first time information may be represented by using offset time. For example, the first time information is represented by using an offset value of reference time. The reference time may be cell service end time.

Optionally, the first time information may be represented by using absolute time.

Optionally, the first time information may be represented by using a system frame and a subframe.

With reference to the fourth aspect, in a possible implementation, the terminal device switches to the target cell based on the first configuration information and the second configuration information.

According to a fifth aspect, a communication method is provided. The method may be performed by a network device, or may be performed by a chip or a circuit configured in the network device. This is not limited in this application.

The method includes: The network device sends a first message, where the first message includes group identification information, and the group identification information indicates a group to which terminal devices belong. The network device sends, to the terminal devices in a multicast manner, first configuration information and second configuration information that correspond to the group to which the terminal devices belong, where the first configuration information includes a cell-specific parameter of a target cell to be accessed by the terminal devices, the second configuration information includes parameter information used by the terminal devices to access the to-be-accessed target cell through a non-terrestrial network NTN, and the first configuration information and the second configuration information are used by the terminal devices to access the to-be-accessed target cell.

According to this technical solution, the network device sends common information (the first configuration information) of the to-be-accessed cell to the terminal devices via a multicast message, and the terminal devices may directly receive the first configuration information via the multicast message, so that a quantity of times the terminals receive the common information of the cell and an amount of the common information can be reduced, and power consumption overheads of the terminals can be reduced.

Optionally, the group identification information may be a group radio network temporary identifier.

For example, a network device configures a same G-RNTI for terminal devices that belong to a same group. That is, the terminal devices having the same G-RNTI belong to the same group.

In this scenario, the terminals not only need to receive a terminal-specific message, but also need to receive a multicast message of a group to which the terminals belong. For example, the terminals not only need to receive a message scrambled by using a terminal-specific C-RNTI, but also need to receive a message scrambled by using the G-RNTI.

With reference to the fifth aspect, in a possible implementation, the network device sends third configuration information, where the third configuration information includes a handover trigger condition, and the handover trigger condition indicates the terminal devices to switch to the target cell.

In this technical solution, the network device configures a specific handover trigger condition for the terminal devices, to indicate the terminal devices to switch to the target cell.

With reference to the fifth aspect, in a possible implementation, the third configuration information further includes identification information of the target cell.

With reference to the fifth aspect, in a possible implementation, the group identification information is a group radio network temporary identifier.

According to a sixth aspect, a communication method is provided. The method may be performed by a terminal device, or may be performed by a chip or a circuit configured in the terminal device. This is not limited in this application.

The method includes: The terminal device receives a first message, where the first message includes group identification information, and the group identification information indicates a group to which the terminal device belongs. The terminal device receives first configuration information and second configuration information that correspond to the group to which the terminal device belongs, where the first configuration information includes a cell-specific parameter of a target cell to be accessed by the terminal device, the second configuration information includes parameter information used by the terminal device to access the to-be-accessed target cell through a non-terrestrial network NTN, and the first configuration information and the second configuration information are used by the terminal device to access the to-be-accessed target cell.

According to this technical solution, the terminal device receives grouping information sent by a network device, further determines the group to which the terminal device belongs, and further receives the first configuration information and the second configuration information that are of the group to which the terminal device belongs and that are sent by the network device. That is, the terminal device may directly receive the first configuration information via a multicast message, so that a quantity of times the terminal receives common information of the cell and an amount of the common information can be reduced, and power consumption overheads of the terminal can be reduced.

Optionally, the group identification information may be a group radio network temporary identifier.

For example, a network device configures a same G-RNTI for terminal devices that belong to a same group. That is, the terminal devices having the same G-RNTI belong to the same group.

In this scenario, the terminal not only needs to receive a terminal-specific message, but also needs to receive a multicast message of a group to which the terminal belongs. For example, the terminal not only needs to receive a message scrambled by using a terminal-specific C-RNTI, but also needs to receive a message scrambled by using the G-RNTI.

With reference to the sixth aspect, in a possible implementation, the terminal device receives third configuration information, where the third configuration information includes a handover trigger condition. The terminal device switches to the target cell based on the handover trigger condition.

In this technical solution, the terminal device determines, based on a specific handover trigger condition configured by the network device, to switch to the target cell.

With reference to the sixth aspect, in a possible implementation, the third configuration information further includes identification information of the target cell.

With reference to the sixth aspect, in a possible implementation, the group identification information is a group radio network temporary identifier.

In a conventional technology, a common part of a handover command may be sent via a common message. In an existing procedure, after switching to a current cell, the terminal starts to receive common information of a candidate target cell. However, an NTN cell has wide coverage, and there are many neighboring cells. Due to movement of a satellite, the candidate target cell varies, the NTN cell updates the broadcast common information of the candidate target cell, and the terminal needs to receive common information of a latest candidate target cell. After the terminal switches to the current cell, handover usually does not immediately occur again. However, before the handover occurs, the terminal frequently receives the common information of the candidate target cell. This results in power consumption overheads of the terminal.

In view of this, this application provides a communication method, to communicate, between a terminal device and a network device, a common message needed by the terminal to access a candidate target cell, and avoid a case in which the terminal frequently receives common information of the candidate target cell before handover occurs, thereby reducing power consumption overheads.

According to a seventh aspect, a communication apparatus is provided. The apparatus may be a terminal device, or may be a chip or a circuit configured in the terminal device. This is not limited in this application.

The apparatus includes: a transceiver unit, configured to obtain first configuration information, where the first configuration information includes non-terrestrial network NTN parameter information, and the NTN parameter information includes parameter information needed by the terminal device to perform measurement on a carrier frequency; and a processing unit, configured to perform measurement on the carrier frequency based on the first configuration information and measurement configuration information, where the measurement configuration information indicates configuration information of the measurement to be performed by the terminal device, and the measurement configuration information and the first configuration information correspond to a same measurement object.

Based on the foregoing technical solution, when obtaining the measurement configuration information, the transceiver unit may also directly obtain the NTN parameter information needed for the measurement or determine the NTN parameter information based on indication information. Further, the processing unit performs measurement based on the measurement configuration information and the NTN parameter information. The processing unit may supplement or adjust, based on ephemeris information in the NTN parameter information, an offset that is of a measurement frequency, measurement time, or the like and that is caused by movement of a satellite, to ensure that searching and measurement can be performed more quickly and accurately, thereby satisfying a communication latency requirement and improving measurement precision.

In this application, the NTN parameter information includes parameter information that is needed by the terminal device to perform measurement on the carrier frequency and that is about accessing an NTN network by the terminal device, and the parameter information may be the ephemeris information.

In this application, the processing unit measures a cell on a carrier frequency of the cell.

In this application, the measurement configuration information indicates the configuration information of the measurement to be performed by the terminal device.

In this application, the configuration information of the measurement to be performed by the terminal device may include measurement configuration information such as intra-frequency measurement configuration information, inter-frequency measurement configuration information, inter-RAT measurement configuration information, or measurement gap configuration information.

With reference to the seventh aspect, in a possible implementation, the transceiver unit is further configured to receive first information, where the first information includes the first configuration information and the measurement configuration information.

In this technical solution, the transceiver unit may simultaneously obtain the first configuration information when obtaining the measurement configuration information, thereby reducing signaling overheads.

With reference to the seventh aspect, in a possible implementation, the transceiver unit is further configured to receive second information, where the second information includes the measurement configuration information and first indication information, and the first indication information indicates a location for carrying the first configuration information. The processing unit is configured to determine the first configuration information based on the first indication information.

In this technical solution, the processing unit is configured to: determine the first configuration information based on indication information sent by a network device, and further use the first configuration information for the measurement.

With reference to the seventh aspect, in a possible implementation, the processing unit is configured to determine, based on the first indication information, a system information block and/or index information in which the first configuration information is located. The processing unit is specifically further configured to determine the first configuration information in third information based on the system information block and/or the index information, where the third information includes the first configuration information.

In this technical solution, the first indication information may indicate a location or a specific bearer resource of the first configuration information, and the processing unit may determine the first configuration information based on the first indication information.

With reference to the seventh aspect, in a possible implementation, the transceiver unit is further configured to receive the third information, where the third information further includes carrier frequency information and/or cell identification information.

In this technical solution, the transceiver unit receives the third information from the network device, to further determine the first configuration information in the third information based on the indication information.

With reference to the seventh aspect, in a possible implementation, the first configuration information further includes the cell identification information and/or a first configuration information index, the first configuration information index indicates NTN parameter information corresponding to a cell, and the cell identification information corresponds to the first configuration information index.

In this technical solution, when the first configuration information includes NTN parameter information corresponding to a plurality of cells, the NTN parameter information corresponding to the cells may be determined based on the first configuration information index.

With reference to the seventh aspect, in a possible implementation, the first configuration information further includes the carrier frequency information and/or a first configuration information index, the first configuration information index indicates NTN parameter information corresponding to the carrier frequency information, and the carrier frequency information corresponds to the first configuration information index.

In this technical solution, when the first configuration information includes NTN parameter information corresponding to a plurality of cells, NTN parameter information corresponding to carrier frequencies of the cells may be determined based on the first configuration information index.

With reference to the seventh aspect, in a possible implementation, the transceiver unit is further configured to receive second configuration information, where the second configuration information includes NTN parameter information, the NTN parameter information includes parameter information needed by the terminal device to perform measurement on the carrier frequency, the second configuration information is used by the terminal device to perform measurement on the carrier frequency within first duration, the first duration is a time length that exceeds validity duration of the first configuration information, and the validity duration is longest time within which the terminal device performs measurement by using the first configuration information.

In this technical solution, in the movement of the satellite, movement parameter information such as a speed, a location, and a trajectory dynamically varies. Therefore, the NTN parameter information needs to be updated, to ensure that the provided ephemeris information is more accurate, and ensure that the processing unit can perform searching and measurement more quickly and accurately. Therefore, after the validity duration of the first configuration information is exceeded, the updated second configuration information needs to be used to continue the measurement, to ensure measurement accuracy and satisfy a communication latency requirement.

With reference to the seventh aspect, in a possible implementation, the transceiver unit is configured to receive the first information, where the first information includes the first configuration information and the measurement configuration information, the first configuration information includes the non-terrestrial network NTN parameter information, the NTN parameter information includes the parameter information needed by the terminal device to perform measurement on the carrier frequency, and the measurement configuration information and the first configuration information correspond to the same measurement object. The processing unit is configured to perform measurement on the carrier frequency based on the first configuration information and the measurement configuration information.

With reference to the seventh aspect, in a possible implementation, the transceiver unit is configured to receive the second information, where the second information includes the measurement configuration information and the first indication information. The processing unit is configured to determine the first configuration information based on the first indication information, where the first configuration information includes the non-terrestrial network NTN parameter information, and the NTN parameter information includes the parameter information needed by the terminal device to perform measurement on the carrier frequency. The processing unit is further configured to perform measurement on the carrier frequency based on the first configuration information and the measurement configuration information, where the measurement configuration information and the first configuration information correspond to the same measurement object.

With reference to the seventh aspect, in a possible implementation, the transceiver unit is further configured to obtain the first configuration information, where the first configuration information includes the non-terrestrial network NTN parameter information, and the NTN parameter information includes the parameter information needed by the terminal device to perform measurement on the carrier frequency. The processing unit is further configured to perform measurement on the carrier frequency based on the first configuration information and intra-frequency/inter-frequency/inter-RAT measurement configuration information, where the intra-frequency or inter-frequency measurement configuration information and the first configuration information correspond to a same measurement object.

In this application, in the idle state or the inactive state, the network device sends the intra-frequency measurement configuration information, the inter-frequency measurement configuration information, or the inter-RAT measurement configuration information via a broadcast message. In addition, the broadcast message may further carry the first indication information. The terminal device determines, based on the first indication information, the system information block and/or the index information in which the first configuration information is located. The terminal device further determines the first configuration information in the third information based on the system information block and/or the index information in which the first configuration information is located, where the third information is information that is sent by the network device via a broadcast message and that includes the first configuration information.

According to an eighth aspect, a communication apparatus is provided. The apparatus may be a network device, or the apparatus may be a chip or a circuit configured in a network device. This is not limited in this application.

The apparatus includes: a processing unit, configured to determine first configuration information based on measurement configuration information, where the first configuration information includes non-terrestrial network NTN parameter information, the NTN parameter information includes parameter information needed by a terminal device to perform measurement on a carrier frequency, and the measurement configuration information indicates configuration information of the measurement to be performed by the terminal device, and a transceiver unit, configured to send the first configuration information and the measurement configuration information, where the first configuration information and the measurement configuration information are used by the terminal device to perform measurement on the carrier frequency, and the measurement configuration information and the first configuration information correspond to a same measurement object.

Based on the foregoing technical solution, when sending the measurement configuration information to the terminal device, the transceiver unit may directly send the NTN parameter information needed for the measurement or simultaneously send indication information to indicate a location of the NTN parameter information, so that the transceiver unit can directly obtain the NTN parameter information. Further, the processing unit performs measurement based on the measurement configuration information and the NTN parameter information. The processing unit may supplement or adjust, based on ephemeris information in the NTN parameter information, an offset that is of a measurement frequency, measurement time, or the like and that is caused by movement of a satellite, to ensure that searching and measurement can be performed more quickly and accurately, thereby satisfying a communication latency requirement and improving measurement precision.

In this application, the NTN parameter information includes parameter information that is needed by the terminal device to perform measurement on the carrier frequency and that is about accessing an NTN network by the terminal device, and the parameter information may be the ephemeris information.

In this application, the terminal device measures a cell on a carrier frequency of the cell.

In this application, the measurement configuration information indicates the configuration information of the measurement to be performed by the terminal device.

In this application, the configuration information of the measurement to be performed by the terminal device may include measurement configuration information such as intra-frequency measurement configuration information, inter-frequency measurement configuration information, inter-RAT measurement configuration information, or measurement gap configuration information.

With reference to the eighth aspect, in a possible implementation, the transceiver unit is configured to send first information, where the first information includes the first configuration information and the measurement configuration information.

In this technical solution, the transceiver unit may simultaneously send the first configuration information when configuring the measurement configuration information, thereby reducing signaling overheads.

With reference to the eighth aspect, in a possible implementation, the transceiver unit is configured to send second information, where the second information includes the measurement configuration information and first indication information, the first indication information indicates a location for carrying the first configuration information, and the first indication information is used by the terminal device to determine the first configuration information.

In this technical solution, the network device may indicate the location of the first configuration information by using indication information, so that the terminal device determines the first configuration information for the measurement.

With reference to the eighth aspect, in a possible implementation, the first indication information indicates a system information block and/or index information in which the first configuration information is located in third information.

In this technical solution, the first indication information may indicate the location or a specific bearer resource of the first configuration information, and the terminal device may determine the first configuration information based on the first indication information.

With reference to the eighth aspect, in a possible implementation, the transceiver unit is configured to send the third information, where the third information further includes cell identification information and/or carrier frequency information of a cell.

In this technical solution, the transceiver unit sends the third information, so that the terminal device determines the first configuration information in the third information based on the indication information.

With reference to the eighth aspect, in a possible implementation, the first configuration information further includes the cell identification information and/or a first configuration information index, the first configuration information index indicates NTN parameter information corresponding to the cell, and the cell identification information corresponds to the first configuration information index.

In this technical solution, when the first configuration information includes NTN parameter information corresponding to a plurality of cells, the NTN parameter information corresponding to the cells may be determined based on the first configuration information index.

With reference to the eighth aspect, in a possible implementation, the first configuration information further includes the carrier frequency information and/or a first configuration information index, the first configuration information index indicates NTN parameter information corresponding to the carrier frequency information, and the carrier frequency information corresponds to the first configuration information index.

In this technical solution, when the first configuration information includes NTN parameter information corresponding to a plurality of cells, NTN parameter information corresponding to carrier frequencies of the cells may be determined based on the first configuration information index.

With reference to the eighth aspect, in a possible implementation, the transceiver unit is configured to send second configuration information, where the second configuration information includes NTN parameter information of at least one cell on different carrier frequencies, the NTN parameter information includes parameter information used by the terminal device to access the at least one cell through an NTN, the second configuration information is used by the terminal device to measure the at least one cell within first duration, the first duration is a time length that exceeds validity duration of the first configuration information, and the validity duration is longest time within which the terminal device performs measurement by using the first configuration information.

In this technical solution, in the movement of the satellite, movement parameter information such as a speed, a location, and a trajectory dynamically varies. Therefore, the NTN parameter information needs to be updated, to ensure that the provided ephemeris information is more accurate, and ensure that the terminal device can perform searching and measurement more quickly and accurately. Therefore, after the validity duration of the first configuration information is exceeded, the updated second configuration information needs to be used to continue the measurement, to ensure measurement accuracy and satisfy a communication latency requirement.

According to a ninth aspect, a communication apparatus is provided. The apparatus may be a network device, or may be a chip or a circuit configured in the network device. This is not limited in this application.

The apparatus includes: a processing unit, configured to determine second configuration information based on first configuration information, where the first configuration information includes a cell-specific parameter of a target cell to be accessed by a terminal device, and the second configuration information includes parameter information used by the terminal device to access the to-be-accessed target cell through a non-terrestrial network NTN; and a transceiver unit, configured to send the first configuration information, the second configuration information, and first information, where the first information indicates the terminal device to receive the first configuration information and the second configuration information, and the first configuration information and the second configuration information are used by the terminal device to access the to-be-accessed target cell.

According to this technical solution, the network device indicates the terminal device to receive common information (the first configuration information) of the to-be-accessed cell under a reasonable condition (a proper time, a proper location, or the like), and the terminal device accesses the to-be-accessed target cell based on the common information and the second configuration information, so that a quantity of times the terminal receives the common information of the cell and an amount of the common information can be reduced, and power consumption overheads of the terminal can be reduced.

With reference to the ninth aspect, in a possible implementation, the first information includes a first condition, and the first condition indicates the terminal device to receive the first configuration information and the second configuration information.

In this technical solution, the network device indicates a specific condition to the terminal device, so that the terminal device determines whether the condition is satisfied, to receive the first configuration information.

With reference to the ninth aspect, in a possible implementation, the first condition is that a current moment of the terminal device is prior to a first start moment, the first start moment is a start moment of a first time period, and the first time period is a time period in which the terminal device switches from a current serving cell of the network device to the to-be-accessed target cell.

In this technical solution, the network device indicates the terminal device to receive the first configuration information when the terminal device determines that current time is prior to start time of the first time period.

With reference to the ninth aspect, in a possible implementation, the first condition is that a difference between a first offset value and a distance between the terminal device and a first reference point is greater than a first threshold or that a sum of a second offset value and a distance between the terminal device and a second reference point is less than a second threshold, the first reference point is a location within coverage of a current serving cell of the terminal device, the current serving cell is a cell within coverage of the network device, the second reference point is a location within coverage of the target cell to be accessed by the terminal device, the first offset value and the second offset value are hysteresis parameters, and the hysteresis parameter is a maximum value of an allowed error.

In this technical solution, the network device indicates the terminal device to receive the first configuration information when the terminal device determines that a current location satisfies a location condition.

With reference to the ninth aspect, in a possible implementation, the first information includes first indication information, and the first indication information indicates the terminal device to receive the first configuration information and the second configuration information.

In this technical solution, the network device directly indicates, by using indication information, the terminal device to receive the first configuration information.

With reference to the ninth aspect, in a possible implementation, the first information includes first time information, the first time information indicates time at/within which the network device sends the first configuration information and time at/within which the network device sends the second configuration information, the first time information is used by the terminal device to receive the first configuration information at/within the time at/within which the network device sends the first configuration information and receive the second configuration information at/within the time at/within which the network device sends the second configuration information.

In this technical solution, the network device indicates, by indicating specific time information, the terminal device to receive the first configuration information at/within the corresponding time.

According to a tenth aspect, a communication apparatus is provided. The apparatus may be a terminal device, or may be a chip or a circuit configured in the terminal device. This is not limited in this application.

The apparatus includes: a transceiver unit, configured to receive first information; and a processing unit, configured to receive first configuration information and second configuration information based on the first information, where the first configuration information includes a cell-specific parameter of a target cell to be accessed by the terminal device, the second configuration information includes parameter information used by the terminal device to access the to-be-accessed target cell through a non-terrestrial network NTN, and the first configuration information and the second configuration information are used by the terminal device to access the to-be-accessed target cell.

According to this technical solution, the terminal device may receive common information of the to-be-accessed cell under a reasonable condition (appropriate time, an appropriate location, or the like) based on an indication of a network device, so that a quantity of times the terminal receives the common information of the cell and an amount of the common information can be reduced, and power consumption overheads of the terminal can be reduced.

With reference to the tenth aspect, in a possible implementation, the terminal device determines a first condition based on the first information. The terminal device determines, based on the first condition, to receive the first configuration information and the second configuration information.

In this technical solution, the network device indicates a specific condition to the terminal device, so that the terminal device determines whether the condition is satisfied, to receive the first configuration information.

With reference to the tenth aspect, in a possible implementation, the terminal device determines that the first condition is that a current moment of the terminal device is prior to a start moment of a first time period, where the first time period is a time period in which the terminal device switches from a current serving cell of a network device to the to-be-accessed target cell. The terminal device receives the first configuration information and the second configuration information at the current moment.

In this technical solution, the network device indicates the terminal device to receive the first configuration information when the terminal device determines that current time is prior to start time of the first time period.

With reference to the tenth aspect, in a possible implementation, the processing unit is specifically configured to determine that the first condition is that a difference between a first offset value and a distance between the terminal device and a first reference point is greater than a first threshold or that a sum of a second offset value and a distance between the terminal device and a second reference point is less than a second threshold, where the first reference point is a location within coverage of a current serving cell of the terminal device, the current serving cell is a cell within coverage of a network device, the second reference point is a location within coverage of the target cell to be accessed by the terminal device, the first offset value and the second offset value are hysteresis parameters, and the hysteresis parameter is a maximum value of an allowed error. The transceiver unit is specifically configured to receive the first configuration information and the second configuration information at a current location.

In this technical solution, the network device indicates the terminal device to receive the first configuration information when the terminal device determines that a current location satisfies a location condition.

With reference to the tenth aspect, in a possible implementation, the processing unit is specifically configured to determine first indication information based on the first information. The transceiver unit is specifically configured to receive the first configuration information and the second configuration information based on the first indication information.

In this technical solution, the network device directly indicates, by using indication information, the terminal device to receive the first configuration information.

With reference to the tenth aspect, in a possible implementation, the processing unit is specifically configured to determine first time information based on the first information, where the first time information indicates time at/within which a network device sends the first configuration information and time at/within which the network device sends the second configuration information. The transceiver unit is specifically configured to: receive the first configuration information at/within the time at/within which the network device sends the first configuration information, and receive the second configuration information at/within the time at/within which the network device sends the second configuration information.

In this technical solution, the network device indicates, by indicating specific time information, the terminal device to receive the first configuration information at/within the corresponding time.

With reference to the tenth aspect, in a possible implementation, the processing unit is further configured to switch to the target cell based on the first configuration information and the second configuration information.

According to an eleventh aspect, a communication apparatus is provided. The apparatus may be a network device, or may be a chip or a circuit configured in the network device. This is not limited in this application.

The apparatus includes a transceiver unit, configured to send a first message, where the first message includes group identification information, and the group identification information indicates a group to which terminal devices belongs, where the transceiver unit is further configured to send, to the terminal devices in a multicast manner, first configuration information and second configuration information that correspond to the group to which the terminal devices belong, where the first configuration information includes a cell-specific parameter of a target cell to be accessed by the terminal devices, the second configuration information includes parameter information used by the terminal devices to access the to-be-accessed target cell through a non-terrestrial network NTN, and the first configuration information and the second configuration information are used by the terminal devices to access the to-be-accessed target cell.

According to this technical solution, the network device sends common information (the first configuration information) of the to-be-accessed cell to the terminal devices via a multicast message, and the terminal devices may directly receive the first configuration information via the multicast message, so that a quantity of times the terminals receive the common information of the cell and an amount of the common information can be reduced, and power consumption overheads of the terminals can be reduced.

With reference to the eleventh aspect, in a possible implementation, the transceiver unit is specifically configured to send third configuration information, where the third configuration information includes a handover trigger condition, and the handover trigger condition indicates the terminal devices to switch to the target cell.

In this technical solution, the network device configures a specific handover trigger condition for the terminal devices, to indicate the terminal devices to switch to the target cell.

With reference to the eleventh aspect, in a possible implementation, the third configuration information further includes identification information of the target cell.

With reference to the eleventh aspect, in a possible implementation, the group identification information is a group radio network temporary identifier.

According to a twelfth aspect, a communication apparatus is provided. The apparatus may be a terminal device, or may be a chip or a circuit configured in the terminal device. This is not limited in this application.

The apparatus includes a transceiver unit, configured to receive a first message, where the first message includes group identification information, and the group identification information indicates a group to which the terminal device belongs, where the transceiver unit is further configured to receive first configuration information and second configuration information that correspond to the group to which the terminal device belongs, where the first configuration information includes a cell-specific parameter of a target cell to be accessed by the terminal device, the second configuration information includes parameter information used by the terminal device to access the to-be-accessed target cell through a non-terrestrial network NTN, and the first configuration information and the second configuration information are used by the terminal device to access the to-be-accessed target cell.

According to this technical solution, the terminal device receives grouping information sent by a network device, further determines the group to which the terminal device belongs, and further receives the first configuration information and the second configuration information that are of the group to which the terminal device belongs and that are sent by the network device. That is, the terminal device may directly receive the first configuration information via a multicast message, so that a quantity of times the terminal receives common information of the cell and an amount of the common information can be reduced, and power consumption overheads of the terminal can be reduced.

With reference to the twelfth aspect, in a possible implementation, the transceiver unit is further configured to receive third configuration information, where the third configuration information includes a handover trigger condition. A processing unit is further used by the terminal device to switch to the target cell based on the handover trigger condition.

In this technical solution, the terminal device determines, based on a specific handover trigger condition configured by the network device, to switch to the target cell.

With reference to the twelfth aspect, in a possible implementation, the third configuration information further includes identification information of the target cell.

With reference to the twelfth aspect, in a possible implementation, the group identification information is a group radio network temporary identifier.

According to a thirteenth aspect, a communication apparatus is provided. The apparatus is configured to perform the method provided in the first aspect. Specifically, the communication apparatus may include a unit and/or a module configured to perform the method provided in any implementation of the first aspect and the second aspect, the third aspect and the fourth aspect, or the fifth aspect and the sixth aspect, for example, a processing unit and/or a communication unit.

In an implementation, the communication apparatus includes the communication unit and the processing unit. The communication unit may be a transceiver or an input/output interface. The processing unit may be at least one processor. Optionally, the transceiver may be a transceiver circuit. Optionally, the input/output interface may be an input/output circuit.

In another implementation, the communication apparatus is a chip, a chip system, or a circuit in a network device. When the communication apparatus is the chip, the chip system, or the circuit in the network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fourteenth aspect, a communication apparatus is provided, includes a processor, and optionally, further includes a memory. The processor is configured to control a transceiver to receive and send a signal. The memory is configured to store a computer program. The processor is configured to invoke the computer program from the memory and run the computer program, so that the communication apparatus performs the method in any possible implementation of the first aspect and the second aspect, the third aspect and the fourth aspect, or the fifth aspect and the sixth aspect.

Optionally, there are one or more processors, and there are one or more memories.

Optionally, the memory may be integrated with the processor, or the memory and the processor are separately disposed.

Optionally, the communication apparatus further includes the transceiver. The transceiver may be specifically a transmitter (transmitter) and a receiver (receiver).

According to a fifteenth aspect, a communication system is provided, and includes: a terminal device, configured to perform the method in any possible implementation of the first aspect, the fourth aspect, or the sixth aspect; and a network device, configured to perform the method in any possible implementation of the second aspect, the third aspect, or the fifth aspect.

According to a sixteenth aspect, a computer-readable storage medium is provided. The computer-readable storage medium stores a computer program or code. When the computer program or the code is run on a computer, the computer is enabled to perform the method in any possible implementation of the first aspect and the second aspect, the third aspect and the fourth aspect, or the fifth aspect and the sixth aspect.

According to a seventeenth aspect, a chip is provided, and includes at least one processor. The at least one processor is coupled to a memory. The memory is configured to store a computer program. The processor is configured to invoke the computer program from the memory and run the computer program, so that a sending device in which the chip is installed performs the method in any possible implementation of the first aspect and the second aspect, the third aspect and the fourth aspect, or the fifth aspect and the sixth aspect.

The chip may include an input circuit or interface configured to send information or data, and an output circuit or interface configured to receive information or data.

According to an eighteenth aspect, a computer program product is provided. The computer program product includes computer program code. When the computer program code is run by a sending device, the method in any possible implementation of the first aspect and the second aspect, the third aspect and the fourth aspect, or the fifth aspect and the sixth aspect is performed.

For beneficial effects of the seventh aspect to the eighteenth aspect, refer to the beneficial effects of the first aspect to the sixth aspect. Details are not described again.

### BRIEF DESCRIPTION OF DRAWINGS

FIG. 1 is a diagram of a network architecture applicable to an embodiment of this application;
FIG. 2 is a diagram of an architecture of a communication system used in an embodiment of this application;
FIG. 3 is a schematic flowchart of a communication method according to this application;
FIG. 4 is a schematic interaction diagram of a communication method according to this application;
FIG. 5 is a schematic interaction diagram of a communication method according to this application;
FIG. 6 is a schematic interaction diagram of a communication method according to this application;
FIG. 7 is a schematic flowchart of a communication method according to this application;
FIG. 8 is a schematic interaction diagram of a communication method according to this application;
FIG. 9 is a schematic interaction diagram of a communication method according to this application;
FIG. 10 is a schematic interaction diagram of a communication method according to this application;
FIG. 11 is a schematic interaction diagram of a communication method according to this application;
FIG. 12 is a schematic interaction diagram of a communication method according to this application;
FIG. 13 is a diagram of a structure of a communication apparatus according to an embodiment of this application;
FIG. 14 is a diagram of a communication architecture according to an embodiment of this application;
FIG. 15 is a diagram of a structure of another communication apparatus according to an embodiment of this application; and
FIG. 16 is a diagram of another communication architecture according to an embodiment of this application.

### DESCRIPTION OF EMBODIMENTS

The following describes technical solutions in this application with reference to accompanying drawings.

The technical solutions in embodiments of this application may be applied to various communication systems, for example, a long term evolution (LTE) system, a long term evolution-advanced (LTE-A) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a next-generation communication system (for example, a fifth-generation (fifth-generation, 5G) communication system), a converged system of a plurality of access systems, an evolved system, three major application scenarios of a 5G mobile communication system: enhanced mobile bandwidth (enhanced Mobile Broadband, eMBB), ultra-reliable low-latency communication (ultra-reliable low-latency communication, URLLC), and enhanced machine type communication (enhanced Machine Type Communication, eMTC), or a new communication system emerging in the future. The technical solutions provided in this application may be further applied to a future communication system, for example, a sixth-generation mobile communication system. This is not limited in this application.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X may represent everything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

A network device in embodiments of this application may also be referred to as a (radio) access network (radio access network, (R)AN) device. The (R)AN can manage a radio resource, provide an access service for user equipment, and complete forwarding of user equipment data between the user equipment and a core network. The (R)AN may also be understood as a base station in a network, and is an apparatus that is deployed in a radio access network to provide a wireless communication function for a mobile station (mobile station, MS).

For example, the access network device in embodiments of this application may be any communication device that has a wireless transceiver function and that is configured to communicate with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a base band unit (base band unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. The access network device may alternatively be a gNB or a transmission point (TRP or TP) in a 5G system such as an NR system, or one antenna panel or a group of antenna panels (including a plurality of antenna panels) of a base station in the 5G system, or may be a network node, for example, a base band unit (BBU) or a distributed unit (distributed unit, DU), that constitutes a gNB or a transmission point. It may be understood that all or some functions of the access network device in this application may alternatively be implemented by using a software function running on hardware, or may be implemented by using a virtualization function instantiated on a platform (for example, a cloud platform).

In some deployment, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in the radio access network (radio access network, RAN), or the CU may be classified as an access network device in the core network (core network, CN). This is not limited in this application.

A terminal device in embodiments of this application may also be referred to as user equipment (user equipment, UE), a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, for example, glasses, gloves, watches, clothes, and shoes, that are developed by applying wearable technologies to intelligent designs of daily wear. The wearable device is a portable device that can be directly worn on the body or integrated into clothes or an accessory of a user. The wearable device not only is a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that are dedicated to only one type of application and need to be used together with other devices such as smartphones, such as various smart bands or smart jewelry for monitoring physical signs.

In embodiments of this application, a communication apparatus configured to implement a function of the network device may be a network device, may be a network device that has some functions of a base station, or may be an apparatus that can support the network device in implementing the function, for example, a chip system. The apparatus may be installed in the network device.

In actual network deployment, it is impossible for a terrestrial network to cover all areas, especially an area with a small quantity of people, for example, desert, ocean, the north and south poles. A non-terrestrial network NTN network has wide coverage, and is easier to provide coverage in the area with the small quantity of people, and is suitable for deployment in the area with the small quantity of people. Embodiments of this application are applicable to non-terrestrial network NTN network communication. The NTN network is a network or a network segment that uses a radio frequency on board a satellite (a UAS platform). The following describes in detail the technical solutions in this application by using a satellite communication system as an example.

In the satellite communication system, a network device may include a satellite.

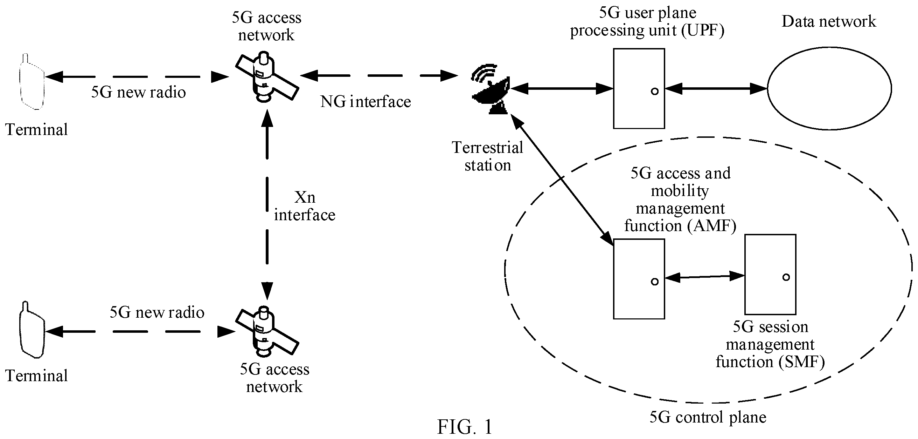

FIG. 1 is a diagram of a network architecture applicable to an embodiment of this application. A terrestrial mobile terminal UE accesses a network through 5G new radio. A 5G access network device is deployed on a satellite, and is connected to a terrestrial core network through a radio link. In addition, there is a radio link between satellites, to implement signaling exchange and user data transmission between access network devices. Network elements in FIG. 1 and interfaces thereof are described as follows:
A terminal device is a mobile device that supports the 5G new radio. Typical examples of the mobile device are a mobile phone and a pad. The terminal device may access a satellite network through the air interface and initiate services such as call and Internet access.

The 5G access network device mainly provides a radio access service, schedules a radio resource for an access terminal, provides a reliable wireless transmission protocol and data encryption protocol, and the like, and is, for example, a base station.

A 5G core network provides services such as user access control, mobility management, session management, user security authentication, and charging, comprises a plurality of functional units, and may be divided into a control-plane functional entity and a data-plane functional entity. An access and mobility management unit (AMF) is responsible for user access management, security authentication, and mobility management. A user plane unit (UPF) is responsible for managing functions such as user plane data transmission and traffic statistics collection.

A terrestrial station is responsible for forwarding signaling and service data between a satellite access network device and the 5G core network.

The 5G new radio is a radio link between the terminal and the access network device.

An Xn interface is an interface between 5G access network devices, and is mainly for signaling exchange such as handover.

An NG interface is an interface between the 5G access network device and the 5G core network, and is mainly for exchanging signaling such as NAS signaling of the core network and service data of a user.

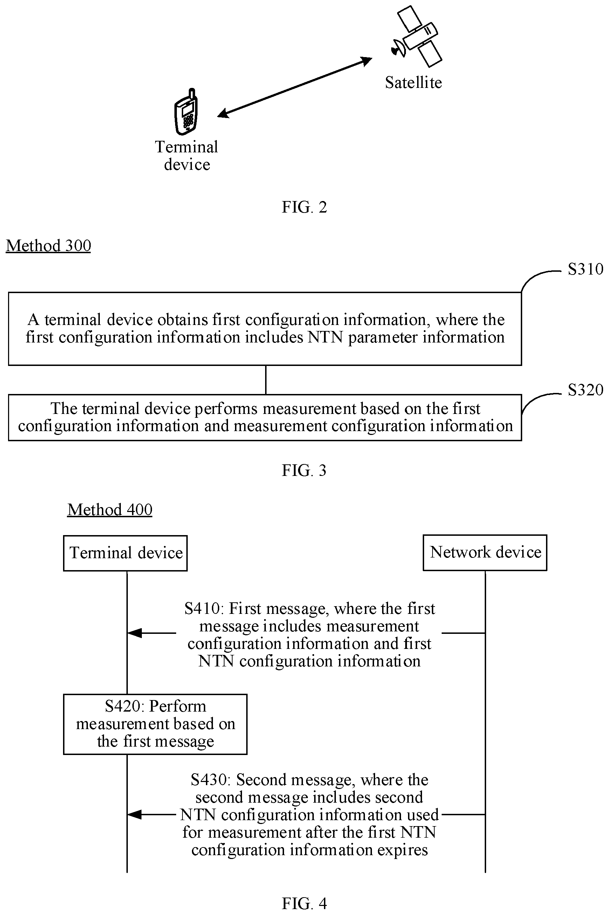

FIG. 2 is a diagram of an architecture of a communication system used in an embodiment of this application. As shown in FIG. 2, the communication system may include at least one network device such as the satellite device shown in FIG. 1. The communication system may further include at least one terminal device such as the terminal device shown in FIG. 1. The network device may communicate with the terminal device through a radio link.

It should be understood that the network device in the wireless communication system may be any device that has a wireless transceiver function. The device includes but is not limited to a base station controller (Base Station Controller, BSC), a base transceiver station (Base Transceiver Station, BTS), or the like, may be one antenna panel or a group of antenna panels (including a plurality of antenna panels) of a base station in a 5G system or the like, or may be a satellite or the like.

It should be understood that, FIG. 2 shows only one network device and one terminal device. In an example, the communication system is not limited, and may include more terminal devices. For example, in a satellite communication network, the satellite may cover a plurality of terminal devices for communication. Each terminal device is not limited to communicating with one network device either. For example, after the satellite moves, the terminal device may need to reselect a satellite for access communication.

It may be understood that FIG. 2 is merely an example, and does not constitute any limitation on the protection scope of this application. A communication method provided in embodiments of this application may further involve a network element or a device that is not shown in FIG. 2. Certainly, the communication method provided in embodiments of this application may alternatively include only some network elements shown in FIG. 2.

In an NTN network, dynamic movement of a satellite causes great impact on a terminal device. For example, high-speed movement of the satellite causes receiving timing and a receiving frequency of the terminal device to vary with time. Therefore, the terminal device needs to estimate a location and a speed of the satellite based on ephemeris information, thereby performing adjustment or compensation for an offset that is of the frequency, time, and the like and that is caused by movement of the satellite.

It should be understood that, in the NTN network, the ephemeris information of the satellite is for describing orbit data of the satellite, and parameters such as time, coordinates, an orientation, and the speed of the satellite may be calculated based on an orbit parameter.

In an existing standard protocol, satellite ephemeris information of a neighboring cell is broadcast in system information SIB19. Current ephemeris information is based on a cell, and it is specified that a maximum quantity of NTN neighboring cells that provide the satellite ephemeris information is four.

Considering that an NTN cell has wide coverage, and there are a large quantity of neighboring cells, the ephemeris information is needed when the terminal measures a measurement object. Ephemeris information of only a maximum of four neighboring cells can be provided currently, and a small amount of ephemeris information cannot satisfy a measurement requirement. However, when a network configures the measurement object for the terminal by using dedicated signaling, a current standard protocol does not indicate, to the terminal, the ephemeris information needed for measuring the measurement object. When the terminal does not have the ephemeris information, measurement of the terminal may fail to satisfy latency and precision requirements.

In view of this, this application provides a communication method and apparatus, to send ephemeris information needed for measurement to a terminal device, so that the terminal device measures a measurement object, thereby satisfying a communication latency requirement and improving measurement precision.

The following describes the solutions in this application.

FIG. 3 is a schematic flowchart of a communication method according to this application. In this embodiment, an example in which a network device and a terminal device are used as execution bodies of interaction illustration is used to illustrate the method. However, the execution bodies of the interaction illustration are not limited in this application. For example, the network device in FIG. 3 may alternatively be a chip, a chip system, or a processor that can support the network device in implementing the method, or may be a logical module or software that can implement all or some functions of the access network device; and the terminal device in FIG. 3 may alternatively be a chip, a chip system, or a processor that can support the terminal device in implementing the method, or may be a logical module or software that can implement all or some functions of the terminal device.

Step S310: The terminal device obtains first configuration information.

In this application, the first configuration information includes NTN parameter information. It may be understood that the NTN parameter information includes parameter information that is needed by the terminal device to perform measurement on a carrier frequency and that is about accessing an NTN network by the terminal device, and the parameter information may be ephemeris information.

In this application, the terminal device measures a cell on a carrier frequency of the cell.

In a possible implementation, the terminal device receives the first configuration information and measurement configuration information.

Accordingly, the network device sends the first configuration information and the measurement configuration information to the terminal device.

The measurement configuration information indicates configuration information of the measurement to be performed by the terminal device.

For example, the configuration information of the measurement to be performed by the terminal device may include measurement configuration information such as intra-frequency measurement configuration information, inter-frequency measurement configuration information, inter-RAT measurement configuration information, or measurement gap configuration information.

By way of example but not limitation, the terminal device receives first information from the network device, where the first information includes the measurement configuration information and the first configuration information.

Accordingly, the network device sends the first information to the terminal device, where the first information includes the measurement configuration information and the first configuration information.

By way of example but not limitation, the terminal device receives first information from the network device, where the first information includes the measurement configuration information, and the terminal device receives second information from the network device, where the second information includes the first configuration information.

Accordingly, the network device sends the first information to the terminal device, where the first information includes the measurement configuration information, and the network device sends the second information to the terminal device, where the second information includes the first configuration information.

The first information and the second information may be sent via a same message, or may be sent via different messages. This is not limited in this embodiment of this application.

In a possible implementation, the terminal device receives measurement configuration information, and determines the first configuration information based on the measurement configuration information.

By way of example but not limitation, the terminal device receives second information from the network device, where the second information includes the measurement configuration information and first indication information, and the first indication information indicates a location for carrying the first configuration information. The terminal device determines the first configuration information based on the first indication information.

For example, the first indication information may indicate a bearer resource of the first configuration information.

For example, the terminal device may determine, based on the first indication information, a system information block and/or index information in which the first configuration information is located, and the terminal device determines the first configuration information based on the system information block and/or the index information in which the first configuration information is located.

For example, the terminal device may receive third information, where the third information includes the first configuration information. The terminal device determines the first configuration information in the third information based on the system information block and/or the index information that are/is indicated by the first indication information.

It should be understood that the network device sends the third information to the terminal device, where the third information may include different NTN parameter information. The different NTN parameter information may be sent via different messages, or may be sent via a same message. In addition, message sending may be performed in a broadcast manner. This is not limited in this embodiment of this application.

Optionally, the third information further includes carrier frequency information and/or cell identification information.

It should be understood that the carrier frequency information includes the carrier frequency corresponding to the cell, and a cell identified by the cell identification information corresponds to the carrier frequency.

There is an association relationship between the first configuration information and the carrier frequency.

There is a correspondence between the first configuration information and the cell. That is, at least one cell found on a corresponding carrier frequency through searching may be measured by using one set of NTN parameter information. In other words, different cells may correspond to different NTN parameter information, or different cells may correspond to a same set of NTN parameter information.

Optionally, the first configuration information further includes the carrier frequency information, and there is a correspondence between the carrier frequency and the first configuration information. That is, the first configuration information is for performing measurement on the carrier frequency.

Optionally, the first configuration information further includes a first configuration information index, and there is a correspondence between the cell and the first configuration information index. That is, the first configuration information index indicates the NTN parameter information corresponding to the different cells.

Optionally, the first configuration information further includes the cell identification information or a cell identification information list. There is a correspondence between the cell identification information or the cell identification information list and the first configuration information. That is, the cell identification information or the cell identification information list may indicate the cell corresponding to the first configuration information.

Optionally, the cell identification information may be a physical cell ID.

Optionally, when adding, modifying, or deleting the cell on the carrier frequency, the network device accordingly modifies the first configuration information corresponding to the cell.

In this application, the measurement configuration information includes information such as measurement object information, report configuration information, and a measurement identifier. This is not limited in this embodiment of this application.

A measurement object (measurement object, MO) defines a measurement target. For example, the measurement object may include the carrier frequency (frequency), neighboring cell information, and a physical cell ID (physical cell identifier, PCI) value that are for the measurement. This is not limited in this embodiment of this application.

Step S320: The terminal device performs measurement on the carrier frequency based on the first configuration information and the measurement configuration information.

Specifically, when performing searching and measurement on the carrier frequency, the terminal device performs searching and measurement by using the NTN parameter information (the first configuration information) on the carrier frequency.

Optionally, when performing searching and measurement on the carrier frequency, the terminal uses NTN parameter information of one or more cells on the carrier frequency to search for and measure the corresponding cell.

Optionally, when the cell on the carrier frequency has no corresponding NTN parameter information, the terminal may choose to measure or not to measure the cell.

In a possible implementation, the terminal device receives second configuration information, where the second configuration information includes NTN parameter information, the second configuration information is used by the terminal device to perform measurement on the carrier frequency within first duration, the first duration is a time length that exceeds validity duration of the first configuration information, and the validity duration is longest time within which the terminal device performs measurement by using the first configuration information.

Optionally, it is understood that the validity duration configured by a network for the first configuration information indicates longest time within which the UE can use the first configuration information when the UE does not obtain new assistance information (satellite ephemeris information, a TA parameter, and the like).

Optionally, it is understood that, when the network device may determine that validity time of the NTN parameter information (the first configuration information) needed by the terminal device for the measurement expires, the network device may reconfigure, for the terminal device, the NTN parameter information (the second configuration information) needed for the measurement.

Optionally, it is understood that the network device reconfigures the second configuration information for the terminal device before the validity time expires.

Optionally, it is understood that, for example, the network device may determine the validity time based on parameters such as a movement speed and an orbit height of a satellite. This is not limited in this embodiment of this application.

Optionally, the network device may send the second configuration information via a broadcast message, or may send the second configuration information via a dedicated signaling message.

In this application, the terminal device receives the new NTN parameter information (the second configuration information), and performs measurement based on the new NTN parameter information and the measurement configuration information.

According to this technical solution, when sending the measurement configuration information to the terminal device, the network device directly sends the NTN parameter information needed for the measurement, or indicates, in the measurement configuration information, a location of the NTN parameter information, so that the terminal device can obtain the NTN parameter information, and further perform measurement based on the measurement configuration information and the NTN parameter information, thereby satisfying a communication latency requirement and improving measurement precision.

The following provides an example of a specific communication method applicable to the foregoing method 300.

FIG. 4 is a schematic interaction diagram of a communication method according to this application. It should be understood that FIG. 4 shows steps or operations of the communication method, but these steps or operations are merely examples. In this embodiment of this application, other operations or variations of the operations in FIG. 4 may alternatively be performed.

Optionally, a procedure shown in FIG. 4 may be performed by a network device, or may be performed by a module, a component (for example, a chip or an integrated circuit), and/or the like that is installed in the network device and that has a corresponding function; or may be performed by a terminal device, or may be performed by a module, a component (for example, a chip or an integrated circuit), and/or the like that is installed in the terminal device and that has a corresponding function. This embodiment is applicable to an NTN communication scenario, for example, the scenario shown in FIG. 1. The following describes the specific steps.

S410: The network device sends a first message to the terminal device.

In this application, the network device sends the first message to the terminal device. Accordingly, the terminal device receives the first message.

Specifically, the first message includes measurement configuration information and NTN parameter information (first NTN parameter information, which is used as an example of first configuration information) needed for measurement.

In this application, the network device may send the first message to the terminal device via a broadcast message or dedicated signaling.

S420: The terminal device performs measurement based on the first message.

In this application, the terminal device determines a carrier frequency #a based on the measurement configuration information, and performs searching and measurement on the carrier frequency #a by using the first NTN parameter information on the carrier frequency #a.

In a possible implementation, first NTN parameter information of one or more cells on the carrier frequency #a is used to search for and measure the corresponding cell.

It may be understood that, when a cell on the carrier frequency #a has no corresponding NTN parameter information, the terminal device may perform blind measurement, or may choose not to measure the cell.

S430: The network device sends a second message to the terminal device.

In this application, the network device may send the second message to the terminal device. Accordingly, the terminal device may receive the second message sent by the network device.

It should be noted that step S430 is an optional step.

In this application, the second message includes second NTN parameter information.

Optionally, it is understood that the second NTN parameter information is used by the terminal device to perform measurement on the carrier frequency #a within first duration, the first duration is a time length that exceeds validity duration of the first configuration information, and the validity duration is longest time within which the terminal device performs measurement by using the first configuration information.

Optionally, it is understood that the validity duration configured by a network for the first configuration information indicates longest time within which the UE can use the first configuration information when the UE does not obtain new assistance information (satellite ephemeris information, a TA parameter, and the like).

In a possible implementation, the network device may determine that the NTN parameter information (the first NTN parameter information) needed by the terminal device for the measurement exceeds a validity period, thereby sending the new NTN parameter information (the second NTN parameter information) to the terminal device.

In a possible implementation, the network device may periodically send the NTN parameter information to the terminal device.

Optionally, the network device may send the second message via a broadcast message, or may send the second message via a dedicated signaling message.

In this application, the terminal device receives the new NTN parameter information, and performs measurement based on the new NTN parameter information and the measurement configuration information.

According to this technical solution, when sending the measurement configuration information to the terminal device, the network device directly sends the NTN parameter information needed for the measurement, so that the terminal device can obtain the NTN parameter information, and further perform measurement based on the measurement configuration information and the NTN parameter information, thereby satisfying a communication latency requirement and improving measurement precision.

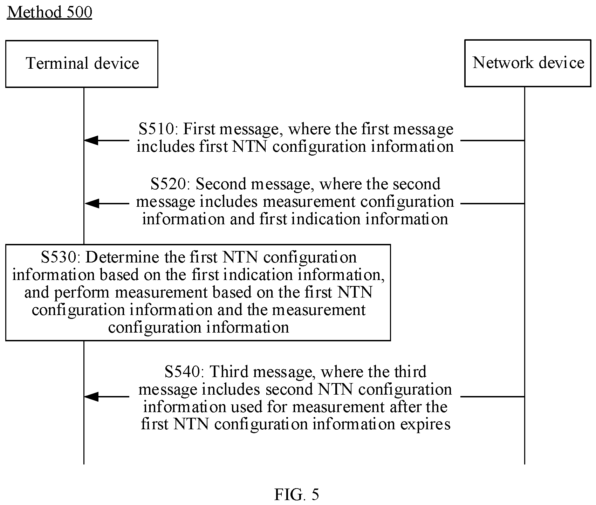

FIG. 5 is a schematic interaction diagram of a communication method according to this application. It should be understood that FIG. 5 shows steps or operations of the communication method, but these steps or operations are merely examples. In this embodiment of this application, other operations or variations of the operations in FIG. 5 may alternatively be performed.

Optionally, a procedure shown in FIG. 5 may be performed by a network device, or may be performed by a module, a component (for example, a chip or an integrated circuit), and/or the like that is installed in the network device and that has a corresponding function; or may be performed by a terminal device, or may be performed by a module, a component (for example, a chip or an integrated circuit), and/or the like that is installed in the terminal device and that has a corresponding function. This embodiment is applicable to an NTN communication scenario, for example, the scenario shown in FIG. 1. The following describes the specific steps.

S510: The network device sends a first message to the terminal device.

In this application, the terminal device receives the first message.

The first message includes parameter information needed by the terminal device to access a cell through an NTN.

The first message further includes NTN parameter information needed by the terminal device for measurement.

In this application, the first message further includes carrier frequency information and/or cell identification information.

It should be understood that the carrier frequency information includes a carrier frequency corresponding to the cell, and a cell identified by the cell identification information corresponds to the carrier frequency.

In this application, the network device may send the first message in a broadcast manner.

S520: The network device sends a second message to the terminal device.

The second message includes measurement configuration information and first indication information.

The first indication information may indicate a bearer resource of the NTN parameter information (first NTN parameter information) needed by the terminal device for the measurement.

Accordingly, the terminal device receives the second message, and determines, based on the first indication information, a location of the NTN parameter information needed for the measurement.

For example, the first indication information indicates a system information block in which NTN parameter information is located. The terminal device may determine, based on the first indication information, a system information block in which the first NTN parameter information is located.

For another example, the first indication information indicates index information in which NTN parameter information is located, and the terminal device determines the needed NTN parameter information in the first message based on the index information in which the NTN parameter information is located.

It should be understood that a sequence of step S510 and step S520 is not limited.

S530: The terminal device performs measurement based on the measurement configuration information and the NTN parameter information needed for the measurement.

For this step, refer to S320 in the method 300 and S420 in the method 400. Details are not described again.

S540: The network device sends a third message to the terminal device.

In this application, the network device may send the third message to the terminal device. Accordingly, the terminal device may receive the third message sent by the network device.

It should be noted that step S540 is an optional step.

In this application, the third message includes second NTN parameter information.

In a possible implementation, the network device may determine that the NTN parameter information (the first NTN parameter information) needed by the terminal device for the measurement exceeds a validity period, thereby sending the new NTN parameter information (the second NTN parameter information) to the terminal device.

In a possible implementation, the network device may periodically send the NTN parameter information to the terminal device.

Optionally, the network device may send the third message via a broadcast message, or may send the third message via a dedicated signaling message.

In this application, the terminal device receives the new NTN parameter information, and performs measurement based on the new NTN parameter information and the measurement configuration information.

According to this technical solution, when sending the measurement configuration information to the terminal device, the network device indicates the location of the NTN parameter information, so that the terminal device can obtain the NTN parameter information, and further perform measurement based on the measurement configuration information and the NTN parameter information, thereby satisfying a communication latency requirement and improving measurement precision.

In this application, the method 400 and the method 500 are scenarios that correspond when the network device and the terminal device are in a connected state. The following describes a communication method applicable to a scenario of an idle state or an inactive state.

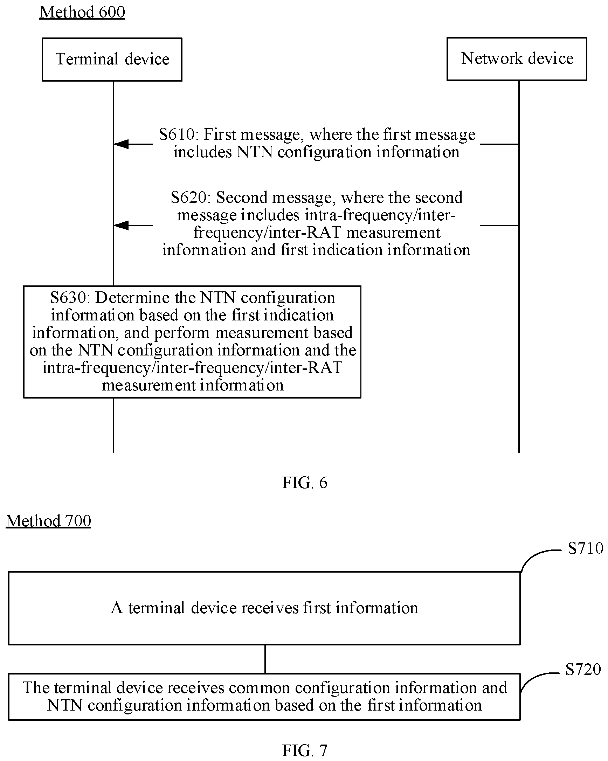

FIG. 6 is a schematic flowchart of a communication method according to this application. It should be understood that FIG. 6 shows steps or operations of the communication method, but these steps or operations are merely examples. In this embodiment of this application, other operations or variations of the operations in FIG. 6 may alternatively be performed.

Optionally, a procedure shown in FIG. 6 may be performed by a network device, or may be performed by a module, a component (for example, a chip or an integrated circuit), and/or the like that is installed in the network device and that has a corresponding function; or may be performed by a terminal device, or may be performed by a module, a component (for example, a chip or an integrated circuit), and/or the like that is installed in the terminal device and that has a corresponding function. This embodiment is applicable to an NTN communication scenario, for example, the scenario shown in FIG. 1. The following describes the specific steps.

S610: The network device sends a first message to the terminal device.

The first message includes parameter information needed by the terminal device to access a cell through an NTN.

The first message further includes NTN parameter information needed by the terminal device for measurement.

In this application, the first message further includes carrier frequency information and/or cell identification information.

It should be understood that the carrier frequency information includes a carrier frequency corresponding to the cell, and a cell identified by the cell identification information corresponds to the carrier frequency.

In this application, the network device may send the first message in a broadcast manner.

S620: The network device sends a second message to the terminal device.

The second message includes at least one of an intra-frequency measurement configuration message, an inter-frequency measurement configuration message, or an inter-RAT measurement configuration message. The intra-frequency measurement configuration message, the inter-frequency measurement configuration message, or the inter-RAT measurement configuration message is used by the terminal device to perform measurement when the terminal device is in an idle state.

It may be understood that the intra-frequency measurement configuration message, the inter-frequency measurement configuration message, or the inter-RAT measurement configuration message may be sent via one message (for example, the second message), or may be sent via a plurality of messages. This is not limited in this embodiment of this application.

For example, the intra-frequency measurement configuration message may be a SIB3 message, and the inter-frequency measurement configuration message or the inter-RAT measurement configuration message may be a SIB4 message.

The second message further includes first indication information, and the first indication information may indicate a location of the NTN parameter information needed by the terminal device for the measurement.

For example, the first indication information may indicate a bearer resource of the NTN parameter information needed by the terminal device for the measurement.

Accordingly, the terminal device receives the second message, and determines, based on the first indication information, the location of the NTN parameter information needed for the measurement.

For example, the first indication information indicates a system information block in which NTN parameter information is located. The terminal device may determine, based on the first indication information, a system information block in which the NTN parameter information is located.

For another example, the first indication information indicates index information in which NTN parameter information is located, and the terminal device determines the needed NTN parameter information (an example of first configuration information) in the first message based on the index information in which the NTN parameter information is located.

It should be understood that a sequence of step S610 and step S620 is not limited.

S630: The terminal device performs measurement based on the intra-frequency/inter-frequency/inter-RAT measurement configuration information and the NTN parameter information needed for the measurement.

For this step, refer to S320 in the method 300 and S420 in the method 400. Details are not described again.

According to this technical solution, in an idle state or an inactive state, when sending intra-frequency/inter-frequency/inter-RAT measurement configuration information to the terminal device, the network device indicates the location of the NTN parameter information, so that the terminal device can obtain the NTN parameter information, and further perform measurement based on measurement configuration information and the NTN parameter information, thereby satisfying a communication latency requirement and improving measurement precision.

In this application, further, in an NTN network, a cell has wide coverage, and there are a large quantity of terminals. Movement of a satellite may cause handover of a large amount of UE within short time. Consequently, a large amount of signaling is exchanged between a network and the UE within the short time, and a large quantity of signaling overheads are caused.

In a conventional technology, a common part of a handover command may be sent via a common message. For example, in R16, T304 and ServingCellConfigCommon in ReconfigurationWithSync are the same for all terminals, and may be considered as the common part. Table 1 below shows overheads needed for a common part, namely, T304 and/or ServingCellConfigCommon, of handover signaling.

**Table 1**

| Quantity of target cells | Common part (excluding ntn-config) of handover signaling | Common part (including ntn-config) of handover signaling |
|---|---|---|
| One | 683 bits | 915 bits |
| Four | 2732 bits | 3660 bits |

Overheads needed for ServingCellConfigCommon (excluding a ntn-config field) are approximately 85 bytes. Overheads needed for ntn-config are approximately 28 or 29 bytes. Due to limitation of a physical layer, a maximum size of an SI message is 2976 bits. Therefore, when a quantity of candidate target cells is four or more, a common message needed by a terminal to access the candidate target cells needs to be sent in a new SIB.

In an existing procedure, after switching to a current cell, the terminal starts to receive common information of a candidate target cell. However, an NTN cell has wide coverage, and there are many neighboring cells. Due to the movement of the satellite, the candidate target cell varies, the NTN cell updates the broadcast common information of the candidate target cell, and the terminal needs to receive common information of a latest candidate target cell.

After the terminal switches to the current cell, handover usually does not immediately occur again. However, before the handover occurs, the terminal frequently receives the common information of the candidate target cell. This results in power consumption overheads of the terminal. ServingCellConfigCommon is newly introduced in 3GPP R17 to contain an ephemeris of the satellite. Ephemeris information of the satellite is frequently updated. The terminal can synchronize with a target cell only based on the ephemeris information, and switches to the target cell. To obtain latest ephemeris information, the terminal needs to receive the common information of the latest candidate target cell.

In view of this, this application provides a communication method, to communicate, between a terminal device and a network device, a common message needed by the terminal to access a candidate target cell, and avoid a case in which the terminal frequently receives common information of the candidate target cell before handover occurs, thereby reducing power consumption overheads.

The following describes the solutions in this application.

FIG. 7 is a schematic flowchart of a communication method according to this application. In this embodiment, an example in which a first network device, a second network device, and a terminal device are used as execution bodies of interaction illustration is used to illustrate the method. However, the execution bodies of the interaction illustration are not limited in this application. For example, the first network device in FIG. 7 may alternatively be a chip, a chip system, or a processor that can support the first network device in implementing the method, or may be a logical module or software that can implement all or some functions of the access network device; the second network device in FIG. 7 may alternatively be a chip, a chip system, or a processor that can support the second network device in implementing the method, or may be a logical module or software that can implement all or some functions of the access network device; and the terminal device in FIG. 7 may alternatively be a chip, a chip system, or a processor that can support the terminal device in implementing the method, or may be a logical module or software that can implement all or some functions of the terminal device.

S710: The terminal device receives first information.

In this application, the first network device is a current access network of the terminal device, and the second network device is a target access network of the terminal device.

In this application, the first network device sends the first information to the terminal device.

The first information indicates the terminal device to receive first configuration information and second configuration information.

Optionally, the first information further includes cell-specific configuration information.

Optionally, after receiving the first configuration information and the second configuration information based on the first information, the terminal device receives the cell-specific configuration information.

It may be understood that the cell-specific configuration information is different for different target network devices.

In this application, the first information further includes cell identification information and/or carrier frequency information.

The first configuration information and the second configuration information are used by the terminal device to access a target cell (the second network device).

The first configuration information includes common configuration information for the target cell to be accessed by the terminal device, and the common configuration information includes a cell-specific parameter of the target cell to be accessed by the terminal device.

It may be understood that the common configuration information may be the same when different terminal devices access a same target network device, and the common configuration information is usually different when different terminal devices access different target network devices.

In this application, the common configuration information may further include cell identification information and/or carrier frequency information.

The second configuration information includes NTN parameter information used by the terminal device to access the to-be-accessed target cell.

Optionally, the second configuration information further includes cell identification information and/or carrier frequency information.

It may be understood that, when the second configuration information includes the NTN parameter information of the target cell, the second configuration information may not include the cell identification information and/or the carrier frequency information.

In a possible implementation, the first network device may determine the second configuration information based on the first configuration information.

In a possible implementation, the first network device may send the first configuration information via a first message, and send the second configuration information via a second message.

Optionally, the first message further includes second indication information, and the second indication information indicates a bearer resource of the second configuration information.

For example, the second indication information indicates a system information block or index information in which the second configuration information is located.

In a possible implementation, the first network device may send two pieces of configuration information via a same message.

In this application, the first message and the second message may be sent in a broadcast manner, may be sent via dedicated signaling, may be sent in a same manner, or may be sent in different manners. This is not limited in this embodiment of this application.

It should be noted that a sequence in which the network device sends the first information, the first configuration information, and the second configuration information is not limited in this application.

S720: The terminal device receives the first configuration information and the second configuration information based on the first information.

In a possible manner, the first information includes a first condition, and the terminal device receives the first configuration information and the second configuration information based on an indication of the first condition.

By way of example but not limitation, the first condition is that a current moment of the terminal device is prior to a first moment, and the first moment is a start moment of a first time period.

For example, in a time-based conditional handover (conditional handover, CHO) trigger condition currently defined in an NTN, time is defined by T1 and T2, where T1 is an absolute time value, and T2 is duration starting from T1. The terminal device obtains current time of the terminal device. If the current time is within a time range from T1 to T1+T2, it is considered that the time-based trigger condition is satisfied. In this embodiment, based on a current CHO trigger condition, the first time period in the first condition may be the time range from T1 to T1+T2. In this case, the first moment is the moment T1. That is, the terminal device determines that the current moment is prior to the moment T1. In this case, the terminal device may receive the first configuration information and the second configuration information.

By way of example but not limitation, the first condition is that a difference between a first offset value and a distance between the terminal device and a first reference point is greater than a first threshold or that a sum of a second offset value and a distance between the terminal device and a second reference point is less than a second threshold.

The first reference point is a location within coverage of a current serving cell of the terminal device, the current serving cell is a cell within coverage of the first network device, the second reference point is a location within coverage of the target cell to be accessed by the terminal device, the first offset value and the second offset value are hysteresis parameters, and the hysteresis parameter is a maximum value of an allowed error.

For example, in a location-based CHO trigger condition currently defined in an NTN, a location is defined as a distance between the terminal device and a reference point. Parameters such as referenceLocationl, referenceLocation2, distanceThresFromReference1, distanceThresFromReference2, and hysteresis are included. referenceLocation1 is associated with a serving cell, and referenceLocation2 is associated with a candidate target cell. When a difference between hysteresis and a distance between the terminal and the serving cell is greater than distanceThresFromReference1, and a sum of hysteresis and a distance between the UE and the candidate target cell is less than distanceThresFromReference2, the UE considers that a distance-based trigger condition is satisfied. In this embodiment, based on the current CHO trigger condition, the first condition is that the difference between hysteresis and the distance between the terminal and the serving cell is greater than distanceThresFromReference1 or that the sum of hysteresis and the distance between the UE and the candidate target cell is less than distanceThresFromReference2. In this case, the terminal device may receive the first configuration information and the second configuration information.

Optionally, the first information may further include third indication information, and the third indication information indicates a location of the first configuration information. Based on the third indication information, the terminal device may receive all system information blocks or index information that may include the first configuration information. For an indication manner of the third indication information, refer to the second indication information in the method. Details are not described again.

Optionally, the first information may further include fourth indication information, and the fourth indication information indicates a location of the second configuration information. Based on the fourth indication information, the terminal device may receive all system information blocks or index information that may include the second configuration information. For an indication manner of the fourth indication information, refer to the second indication information in the method. Details are not described again.

Optionally, the third indication information and the second indication information may be a same piece of indication information. This is not limited in this embodiment of this application.

In a possible implementation, the first information includes first indication information, and the first indication information indicates the terminal device to receive the first configuration information and the second configuration information.

The first indication information specifically indicates a bearer resource of the first configuration information and the bearer resource of the second configuration information. Based on the first indication information, the terminal device may receive all system information blocks or index information that may include the second configuration information. For an indication manner of the first indication information, refer to the second indication information in the method. Details are not described again.

It should be understood that, in this application, the first indication information may jointly indicate the bearer resource of the first configuration information and the bearer resource of the second configuration information, or two pieces of indication information may respectively indicate a location of the first configuration information and a location of the second configuration information. This is not limited in this embodiment of this application.

It may be understood that, after receiving the first indication information, the terminal device may clearly find the first configuration information and the second configuration information. In other words, the terminal device receives the first configuration information and the second configuration information on the corresponding bearer resources based on the first indication information.

In a possible manner, the first information includes first time information, the first time information indicates time at/within which the first network device sends the first configuration information and time at/within which the first network device sends the second configuration information, the first time information is used by the terminal device to receive the first configuration information at/within the time at/within which the first network device sends the first configuration information and receive the second configuration information at/within the time at/within which the first network device sends the second configuration information.

It may be understood that the terminal device may determine, based on the first time information, the time at/within which the first network device sends the first configuration information and the time at/within which the first network device sends the second configuration information, to receive the first configuration information and the second configuration information at/within the corresponding time.

Optionally, the first information includes a handover command message.

Optionally, the network device sends the first information before sending the handover command message to the terminal device.

Optionally, the first time information may be represented by using offset time. For example, the first time information is represented by using an offset value of reference time. The reference time may be cell service end time.

Optionally, the first time information may be represented by using absolute time.

Optionally, the first time information may be represented by using a system frame and a subframe.

S730: The terminal device switches to the second network device based on the first configuration information and the second configuration information.

Specifically, the terminal device determines whether to perform handover, and then switches to the second network device based on the first configuration information and the second configuration information.

It may be understood that the terminal device switches from the current serving cell of the first network device to the to-be-accessed target serving cell of the second network device.

For example, if the first information includes the CHO trigger condition, the terminal device may evaluate whether a handover condition is satisfied, to determine whether the handover needs to be triggered.

For another example, when receiving a handover command, the terminal device may trigger the handover.

In this application, a specific handover manner is not limited in this embodiment of this application.

According to this technical solution, the first network device (a source network device) indicates the terminal device to receive common information of the to-be-accessed cell under a reasonable condition (appropriate time, an appropriate location, or the like), so that a quantity of times the terminal receives the common information of the cell and an amount of the common information can be reduced, and power consumption overheads of the terminal can be reduced.

The following provides an example of a specific communication method applicable to the foregoing method 700.

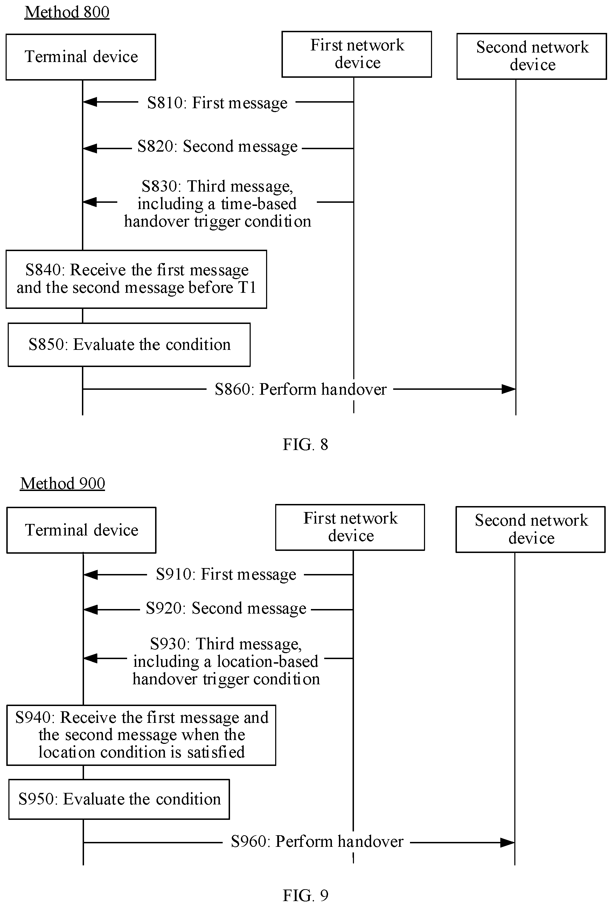

FIG. 8 is a schematic flowchart of a communication method according to this application. It should be understood that FIG. 8 shows steps or operations of the communication method, but these steps or operations are merely examples. In this embodiment of this application, other operations or variations of the operations in FIG. 8 may alternatively be performed.

Optionally, a procedure shown in FIG. 8 may be performed by a network device, or may be performed by a module, a component (for example, a chip or an integrated circuit), and/or the like that is installed in the network device and that has a corresponding function; or may be performed by a terminal device, or may be performed by a module, a component (for example, a chip or an integrated circuit), and/or the like that is installed in the terminal device and that has a corresponding function. This embodiment is applicable to an NTN communication scenario, for example, the scenario shown in FIG. 1. The following describes the specific steps.

S810: A first network device sends a first message to the terminal device.

In this application, the first message includes first configuration information, and the first configuration information includes common configuration information for a target cell to be accessed by the terminal device.

For the common configuration information, refer to the descriptions in the method 700. Details are not described again.

In this application, the first configuration information further includes cell identification information and/or carrier frequency information.

Optionally, the first message further includes first indication information, and the first indication information indicates a bearer resource of second configuration information.

For example, the first indication information indicates a system information block or index information in which the second configuration information is located.

In this application, the first network device may send the first message via a broadcast message, or may send the first message via dedicated signaling.

S820: The first network device sends a second message to the terminal device.

In this application, the second message includes the second configuration information, and the second configuration information includes parameter information used by the terminal device to access the to-be-accessed target cell through an NTN.

Optionally, the second configuration information further includes cell identification information and/or carrier frequency information.

It may be understood that, when the second configuration information includes NTN parameter information of the target cell, the second configuration information may not include the cell identification information and/or the carrier frequency information.

In this application, the first network device may send the second message via a broadcast message, or may send the second message via dedicated signaling.

It should be understood that a sequence of step S810 and step S820 is not limited.

It should be understood that the first configuration information and the second configuration information may alternatively be sent via a same message, and are not limited to a separate-sending solution. This is not limited in this embodiment of this application.

S830: The first network device sends a third message to the terminal device.

Accordingly, the terminal device receives the third message.

The third message includes cell-specific configuration information. It may be understood that the cell-specific configuration information is different for different target network devices.

The third message further includes a time-based CHO trigger condition. The condition includes a time range from T1 to T1+T2. The terminal device determines that a current moment is prior to the moment T1. In this case, the terminal device may receive the first configuration information and the second configuration information.

Optionally, the third message may further include second indication information, and the second indication information indicates a bearer resource of the first configuration information.

For example, the second indication information indicates a system information block or index information in which the first configuration information is located.

Optionally, the third message may further include third indication information, and the third indication information indicates the bearer resource of the second configuration information.

For example, the third indication information indicates the system information block or the index information in which the second configuration information is located.

S840: The terminal device receives the first message and the second message based on the third message.

The terminal device determines, based on the CHO trigger condition, to receive the first message and the second message.

Specifically, if the terminal device determines that the current moment is prior to the moment T1, the terminal device receives the first message and the second message.

Further, the terminal device determines the first configuration information and the second configuration information based on the first message and the second message.

S850: The terminal device determines, based on the third message, to trigger handover.

The terminal device determines, based on the CHO trigger condition, to trigger the handover.

When the terminal device determines that the current moment is after the moment T1 and in the time period T2, another condition of the target cell is also satisfied, and a handover condition of another candidate target cell is not satisfied, the terminal device may trigger the handover.

S860: The terminal device performs handover.

The terminal device disconnects from the first network device, and accesses a second network device.

In this application, a specific handover manner is not limited in this embodiment of this application.

According to this technical solution, the first network device (a source network device) indicates the terminal device to receive common information of the to-be-accessed cell at/within reasonable time, so that a quantity of times the terminal receives the common information of the cell and an amount of the common information can be reduced, and power consumption overheads of the terminal can be reduced.

FIG. 9 is a schematic flowchart of a communication method according to this application. It should be understood that FIG. 9 shows steps or operations of the communication method, but these steps or operations are merely examples. In this embodiment of this application, other operations or variations of the operations in FIG. 9 may alternatively be performed.

Optionally, a procedure shown in FIG. 9 may be performed by a network device, or may be performed by a module, a component (for example, a chip or an integrated circuit), and/or the like that is installed in the network device and that has a corresponding function; or may be performed by a terminal device, or may be performed by a module, a component (for example, a chip or an integrated circuit), and/or the like that is installed in the terminal device and that has a corresponding function. This embodiment is applicable to an NTN communication scenario, for example, the scenario shown in FIG. 1. The following describes the specific steps.

S910: A first network device sends a first message to the terminal device.

In this application, the first message includes first configuration information, and the first configuration information includes common configuration information for a target cell to be accessed by the terminal device.

For the common configuration information, refer to the descriptions in the method 700. Details are not described again.

In this application, the first configuration information further includes cell identification information and/or carrier frequency information.

Optionally, the first message further includes first indication information, and the first indication information indicates a location of second configuration information.

For example, the first indication information indicates a bearer resource of the second configuration information.

For example, the first indication information indicates a system information block or index information in which the second configuration information is located.

In this application, the first network device may send the first message via a broadcast message, or may send the first message via dedicated signaling.

S920: The first network device sends a second message to the terminal device.

In this application, the second message includes the second configuration information, and the second configuration information includes parameter information used by the terminal device to access the to-be-accessed target cell through an NTN.

Optionally, the second configuration information further includes cell identification information and/or carrier frequency information.

It may be understood that, when the second configuration information includes NTN parameter information of the target cell, the second configuration information may not include the cell identification information and/or the carrier frequency information.

In this application, the first network device may send the second message via a broadcast message, or may send the second message via dedicated signaling.

It should be understood that a sequence of step S910 and step S920 is not limited.

It should be understood that the first configuration information and the second configuration information may alternatively be sent via a same message, and are not limited to a separate-sending solution. This is not limited in this embodiment of this application.

S930: The first network device sends a third message to the terminal device.

Accordingly, the terminal device receives the third message.

The third message includes cell-specific configuration information. It may be understood that the cell-specific configuration information is different for different target network devices.

The third message further includes a location-based CHO trigger condition, and parameters of the trigger condition include a reference point 1, a reference point 2, a distance threshold 1, a distance threshold 2, an offset value 1, and an offset value 2.

The condition is specifically as follows: The terminal device determines whether a difference between the offset value 1 and a distance between a current location and the reference point 1 is greater than the distance threshold 1, or the terminal device determines whether a sum of the offset value 2 and a distance between the current location and the reference point 2 is less than the distance threshold 2.

Optionally, the offset value 1 and the offset value 2 may be a same value.

Optionally, the offset value 1 or the offset value 2 may be a zero value.

Optionally, when the offset value 1 or the offset value 2 is default, the offset value 1 or the offset value 2 is a zero value by default.

Optionally, the offset value 1 and the offset value 2 are hysteresis parameters, and the hysteresis parameter is a maximum value of an allowed error.

Optionally, the third message may further include second indication information, and the second indication information indicates a bearer resource of the first configuration information.

For example, the second indication information indicates a system information block or index information in which the first configuration information is located.

Optionally, the third message may further include third indication information, and the third indication information indicates the bearer resource of the second configuration information.

For example, the third indication information indicates the system information block or the index information in which the second configuration information is located.

S940: The terminal device receives the first message and the second message based on the third message.

The terminal device determines, based on the CHO trigger condition, to receive the first message and the second message.

Specifically, if the terminal device determines that the difference between the offset value 1 and the distance between the current location and the reference point 1 is greater than the distance threshold 1, or the terminal device determines that the sum of the offset value 2 and the distance between the current location and the reference point 2 is less than the distance threshold 2, the terminal device receives the first message and the second message.

The reference point 1 is a location within coverage of a current serving cell of the terminal device, the current serving cell is a cell within coverage of the first network device, the reference point 2 is a location within coverage of the target cell to be accessed by the terminal device, the offset value 1 and the offset value 2 are hysteresis parameters, and the hysteresis parameter is the maximum value of the allowed error.

Further, the terminal device determines the first configuration information and the second configuration information based on the first message and the second message.

S950: The terminal device determines, based on the third message, to trigger handover.

The terminal device determines, based on the CHO trigger condition, to trigger the handover.

When the terminal device determines that the difference between the offset value 1 and the distance between the current location and the reference point 1 is greater than the distance threshold 1, the terminal device determines that the sum of the offset value 2 and the distance between the current location and the reference point 2 is less than the distance threshold 2, another condition of the target cell is also satisfied, and a handover condition of another candidate target cell is not satisfied, the terminal device may trigger the handover.

S960: The terminal device performs handover.

The terminal device disconnects from the first network device, and accesses a second network device.

In this application, a specific handover manner is not limited in this embodiment of this application.

According to this technical solution, the first network device (a source network device) indicates the terminal device to receive common information of the to-be-accessed cell at a reasonable location, so that a quantity of times the terminal receives the common information of the cell and an amount of the common information can be reduced, and power consumption overheads of the terminal can be reduced.

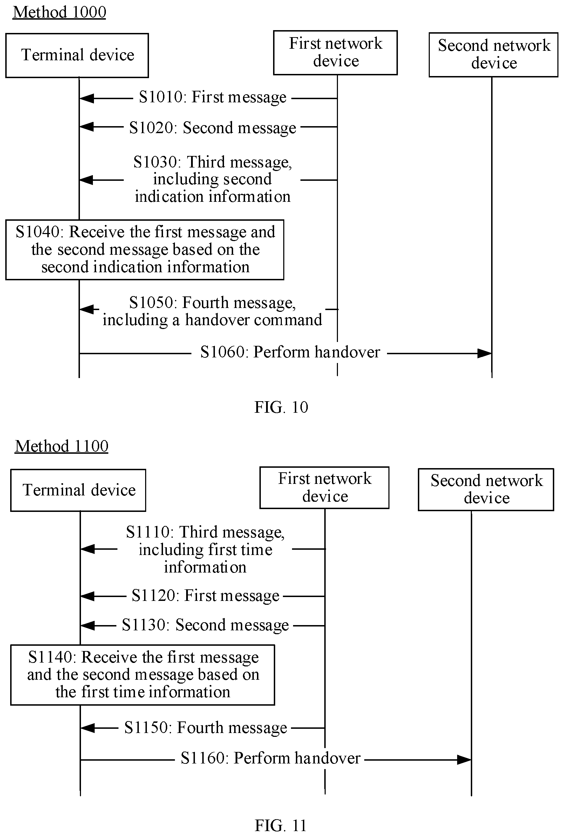

FIG. 10 is a schematic flowchart of a communication method according to this application. It should be understood that FIG. 10 shows steps or operations of the communication method, but these steps or operations are merely examples. In this embodiment of this application, other operations or variations of the operations in FIG. 10 may alternatively be performed.

Optionally, a procedure shown in FIG. 10 may be performed by a network device, or may be performed by a module, a component (for example, a chip or an integrated circuit), and/or the like that is installed in the network device and that has a corresponding function; or may be performed by a terminal device, or may be performed by a module, a component (for example, a chip or an integrated circuit), and/or the like that is installed in the terminal device and that has a corresponding function. This embodiment is applicable to an NTN communication scenario, for example, the scenario shown in FIG. 1. The following describes the specific steps.

S1010: A first network device sends a first message to the terminal device.

In this application, the first message includes first configuration information, and the first configuration information includes common configuration information for a target cell to be accessed by the terminal device.

The common configuration information has been described in detail in the method 700. Details are not described again.

In this application, the first configuration information further includes cell identification information and/or carrier frequency information.

Optionally, the first message further includes first indication information, and the first indication information indicates a location of second configuration information.

For example, the first indication information indicates a bearer resource of the second configuration information.

For example, the first indication information indicates a system information block or index information in which the second configuration information is located.

In this application, the first network device may send the first message via a broadcast message, or may send the first message via dedicated signaling.

S1020: The first network device sends a second message to the terminal device.

In this application, the second message includes the second configuration information, and the second configuration information includes parameter information used by the terminal device to access the to-be-accessed target cell through an NTN.

Optionally, the second configuration information further includes cell identification information and/or carrier frequency information.

It may be understood that, when the second configuration information includes NTN parameter information of the target cell, the second configuration information may not include the cell identification information and/or the carrier frequency information.

In this application, the first network device may send the second message via a broadcast message, or may send the second message via dedicated signaling.

It should be understood that a sequence of step S1010 and step S1020 is not limited.

It should be understood that the first configuration information and the second configuration information may alternatively be sent via a same message, and are not limited to a separate-sending solution. This is not limited in this embodiment of this application.

S 1030: The first network device sends a third message to the terminal device.

Accordingly, the terminal device receives the third message.

The third message includes cell-specific configuration information. It may be understood that the cell-specific configuration information is different for different target network devices.

The third message further includes second indication information. The second indication information specifically indicates a bearer resource of the first configuration information and the bearer resource of the second configuration information. Based on the second indication information, the terminal device may receive all system information blocks or index information that may include the second configuration information.

Optionally, the third message further includes a handover command, indicating the terminal device to switch to a second network device after the terminal device receives the first configuration information and the second configuration information.

It should be understood that, in this application, the second indication information may jointly indicate the bearer resource of the first configuration information and the bearer resource of the second configuration information, or two pieces of indication information may respectively indicate a location of the first configuration information and the location of the second configuration information. This is not limited in this embodiment of this application.

S1040: The terminal device receives the first message and the second message based on the third message.

It may be understood that the terminal device receives the third message, and may clearly find the first configuration information and the second configuration information in the first message and the second message based on the second indication information in the third message. In other words, the terminal device receives the first configuration information and the second configuration information on the corresponding bearer resources based on the second indication information.

S 1050: The terminal device receives a fourth message.

The fourth message includes a handover command message, indicating the terminal device to switch to the second network device after the terminal device receives the first configuration information and the second configuration information.

Optionally, the fourth message includes cell-specific configuration information. The cell-specific configuration information is different for different terminals.

It may be understood that step S1050 is an optional step. For example, when the third message in step S1030 includes the handover command, the first network device may not send the fourth message to the terminal device, or the terminal device may not receive the fourth message sent by the first network device.

S 1060: The terminal device disconnects from the first network device, and accesses the second network device.

In this application, a specific handover manner is not limited in this embodiment of this application.

According to this technical solution, the first network device (a source network device) indicates the terminal device to directly receive common information of the to-be-accessed cell, so that a quantity of times the terminal receives the common information of the cell and an amount of the common information can be reduced, and power consumption overheads of the terminal can be reduced.

FIG. 11 is a schematic flowchart of a communication method according to this application. It should be understood that FIG. 11 shows steps or operations of the communication method, but these steps or operations are merely examples. In this embodiment of this application, other operations or variations of the operations in FIG. 11 may alternatively be performed.

Optionally, a procedure shown in FIG. 11 may be performed by a network device, or may be performed by a module, a component (for example, a chip or an integrated circuit), and/or the like that is installed in the network device and that has a corresponding function; or may be performed by a terminal device, or may be performed by a module, a component (for example, a chip or an integrated circuit), and/or the like that is installed in the terminal device and that has a corresponding function. This embodiment is applicable to an NTN communication scenario, for example, the scenario shown in FIG. 1. The following describes the specific steps.

S1110: A first network device sends a third message to the terminal device.

Accordingly, the terminal device receives the third message.

The third message includes first time information, the first time information indicates time at/within which the first network device sends first configuration information and time at/within which the first network device sends second configuration information, the first time information is used by the terminal device to receive the first configuration information at/within the time at/within which the first network device sends the first configuration information and receive the second configuration information at/within the time at/within which the first network device sends the second configuration information.

Optionally, the first time information may be represented by using offset time. For example, the first time information is represented by using an offset value of reference time. The reference time may be cell service end time.

Optionally, the first time information may be represented by using absolute time.

Optionally, the first time information may be represented by using a system frame and a subframe.

S1120: The first network device sends a first message to the terminal device.

In this application, the first message includes the first configuration information, and the first configuration information includes common configuration information for a target cell to be accessed by the terminal device.

The common configuration information has been described in detail in the method 700. Details are not described again.

In this application, the first configuration information further includes cell identification information and/or carrier frequency information.

Optionally, the first message further includes first indication information, and the first indication information indicates a location of second configuration information.

For example, the first indication information indicates a bearer resource of the second configuration information.

For example, the first indication information indicates a system information block or index information in which the second configuration information is located.

In this application, the first network device may send the first message via a broadcast message, or may send the first message via dedicated signaling.

S1130: The first network device sends a second message to the terminal device.

In this application, the second message includes the second configuration information, and the second configuration information includes parameter information used by the terminal device to access the to-be-accessed target cell through an NTN.

Optionally, the second configuration information further includes cell identification information and/or carrier frequency information.

It may be understood that, when the second configuration information includes NTN parameter information of the target cell, the second configuration information may not include the cell identification information and/or the carrier frequency information.

In this application, the first network device may send the second message via a broadcast message, or may send the second message via dedicated signaling.

It should be understood that a sequence of step S1120 and step S1130 is not limited.

It should be understood that the first configuration information and the second configuration information may alternatively be sent via a same message, and are not limited to a separate-sending solution. This is not limited in this embodiment of this application.

S1140: The terminal device receives the first message and the second message based on the third message.

The terminal device may determine, based on the first time information, the time at/within which the first network device sends the first configuration information and the time at/within which the first network device sends the second configuration information, to receive the first message and the second message at/within the corresponding time.

S1150: The terminal device receives a fourth message.

The fourth message includes cell-specific configuration information. The cell-specific configuration information is different for different terminals.

S1160: The terminal device performs handover.

The terminal device disconnects from the first network device, and accesses a second network device.

In this application, a specific handover manner is not limited in this embodiment of this application.

According to this technical solution, the first network device (a source network device) sends common information of the to-be-accessed cell to the terminal device via a multicast message, so that a quantity of times the terminal receives the common information of the cell and an amount of the common information can be reduced, and power consumption overheads of the terminal can be reduced.

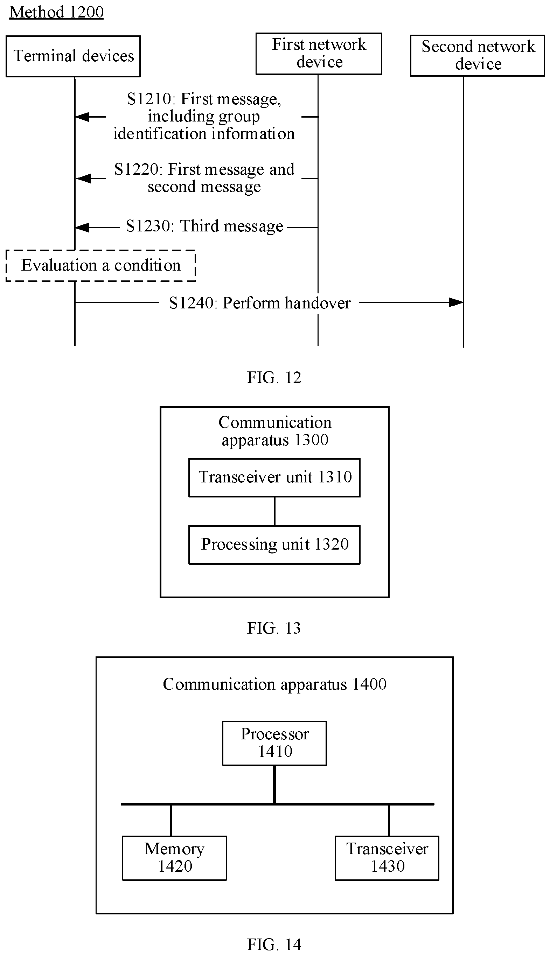

FIG. 12 is a schematic flowchart of a communication method according to this application. In this embodiment, an example in which a first network device, a second network device, and terminal devices are used as execution bodies of interaction illustration is used to illustrate the method. However, the execution bodies of the interaction illustration are not limited in this application. For example, the first network device in FIG. 12 may alternatively be a chip, a chip system, or a processor that can support the first network device in implementing the method, or may be a logical module or software that can implement all or some functions of the access network device; the second network device in FIG. 12 may alternatively be a chip, a chip system, or a processor that can support the second network device in implementing the method, or may be a logical module or software that can implement all or some functions of the access network device; and the terminal devices in FIG. 12 may alternatively be chips, chip systems, or processors that can support the terminal devices in implementing the method, or may be logical modules or software that can implement all or some functions of the terminal devices.

S1210: The first network device sends a first message.

The first message includes group identification information, and the group identification information indicates a group to which the terminal devices belong.

Optionally, the group identification information may be a group radio network temporary identifier.

For example, the first network device configures a same G-RNTI for terminal devices that belong to a same group. That is, the terminal devices having the same G-RNTI belong to the same group.

In this scenario, the terminals not only need to receive a terminal-specific message, but also need to receive a multicast message of the group to which the terminals belong. For example, the terminals not only need to receive a message scrambled by using a terminal-specific C-RNTI, but also need to receive a message scrambled by using the G-RNTI.

S 1220: The first network device sends a first message and a second message to the terminal devices.

In this embodiment, the first network device sends the first message and the second message to the terminal devices in a multicast manner.

In this application, the first message includes first configuration information, and the first configuration information includes common configuration information for a target cell to be accessed by the terminal devices.

The common configuration information has been described in detail in the method 700. Details are not described again.

In this application, the first configuration information further includes cell identification information and/or carrier frequency information.

Optionally, the first message further includes first indication information, and the first indication information indicates a bearer location of second configuration information.

For example, the first indication information indicates a bearer resource of the second configuration information.

For example, the first indication information indicates a system information block or index information in which the second configuration information is located.

In this application, the second message includes the second configuration information, and the second configuration information includes parameter information used by the terminal devices to access the to-be-accessed target cell through an NTN.

Optionally, the second configuration information further includes cell identification information and/or carrier frequency information.

It may be understood that, when the second configuration information includes NTN parameter information of the target cell, the second configuration information may not include the cell identification information and/or the carrier frequency information.

In this application, the first network device may send the second message via a broadcast message, or may send the second message via dedicated signaling.

It should be understood that the first configuration information and the second configuration information may alternatively be sent via a same message, and are not limited to a separate-sending solution. This is not limited in this embodiment of this application.

S 1230: The first network device sends a third message.

The third message includes cell-specific configuration information. The cell-specific configuration information is different for different terminals.

Optionally, the third message may further include a CHO trigger condition, and the CHO trigger condition is used by the terminal devices to determine whether to perform handover.

S 1240: The terminal devices perform handover.

Optionally, the terminal devices determine, based on the CHO trigger condition, to perform handover. A specific determining method has been described in detail in the method 700. Details are not described again.

The terminal devices disconnect from the first network device, and access the second network device.

In this application, a specific handover manner is not limited in this embodiment of this application.

According to this technical solution, the first network device (a source network device) sends common information to the terminal devices in a multicast manner, so that a quantity of times the terminals receive the common information of the cell and an amount of the common information can be reduced, and power consumption overheads of the terminals can be reduced.

It may be understood that, in this application, first and second are merely for differentiation for ease of description, and are not for limiting the scope of embodiments of this application. For example, different information is differentiated.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that, in the foregoing method embodiments, methods and operations implemented by the device may alternatively be implemented by a component (for example, a chip or a circuit) of the device.

Corresponding to the methods provided in the foregoing method embodiments, embodiments of this application further provide corresponding apparatuses. The apparatuses include corresponding modules configured to perform the foregoing method embodiments. The module may be software, hardware, or a combination of software and hardware. It may be understood that the technical features described in the method embodiments are also applicable to the following apparatus embodiments.

FIG. 13 is a diagram of a structure of a communication apparatus according to an embodiment of this application.

The apparatus 1300 includes a transceiver unit 1310 and a processing unit 1320. The transceiver unit 1310 may be configured to implement a corresponding communication function, and the processing unit 1320 may be configured to perform data processing.

Optionally, the transceiver unit 1310 may also be referred to as a communication interface or a communication unit, and includes a sending unit and/or a receiving unit. The transceiver unit 1310 may be a transceiver (including a transmitter and/or a receiver), an input/output interface (including an input interface and/or an output interface), a pin, a circuit, or the like. The transceiver unit 1310 may be configured to perform a sending step and/or a receiving step in the foregoing method embodiments.

Optionally, the processing unit 1320 may be a processor (which may include one or more processors), a processing circuit having a processor function, or the like, and may be configured to perform a step other than sending and receiving in the foregoing method embodiments.

Optionally, the apparatus 1300 further includes a storage unit. The storage unit may be a memory, an internal storage unit (for example, a register or a cache), an external storage unit (for example, a read-only memory or a random access memory), or the like. The storage unit is configured to store instructions. The processing unit 1320 executes the instructions stored in the storage unit, so that the communication apparatus performs the foregoing methods.

In a design, the apparatus 1300 may be configured to perform an action performed by the terminal device in the foregoing method embodiments. For example, the apparatus 1300 may be configured to perform an action performed by the terminal device in the foregoing method 300, 400, 500, or 600. In this case, the apparatus 1300 may be a component of a terminal device. The transceiver unit 1310 is configured to perform an operation related to receiving and sending on a terminal device side in the foregoing method embodiments, and the processing unit 1320 is configured to perform a processing-related operation on the terminal device side in the foregoing method embodiments.

For example, the transceiver unit 1310 is configured to obtain first configuration information, where the first configuration information includes non-terrestrial network NTN parameter information, and the NTN parameter information includes parameter information needed by the terminal device to perform measurement on a carrier frequency. The processing unit 1320 is used by the terminal device to perform measurement on the carrier frequency based on the first configuration information and measurement configuration information, where the measurement configuration information indicates configuration information of the measurement to be performed by the terminal device, and the measurement configuration information and the first configuration information correspond to a same measurement object.

Optionally, the transceiver unit 1310 is specifically configured to receive first information, where the first information includes the first configuration information and the measurement configuration information.

Optionally, the transceiver unit 1310 is specifically configured to receive second information, where the second information includes the measurement configuration information and first indication information, and the first indication information indicates a location for carrying the first configuration information. The processing unit 1320 is specifically configured to determine the first configuration information based on the first indication information.

Optionally, the processing unit 1320 is specifically configured to determine, based on the first indication information, a system information block and/or index information in which the first configuration information is located. The processing unit 1320 is further specifically configured to determine the first configuration information in third information based on the system information block and/or the index information, where the third information includes the first configuration information.

Optionally, the transceiver unit 1310 is further configured to receive the third information, where the third information further includes carrier frequency information and/or cell identification information.

Optionally, the first configuration information further includes the cell identification information and/or a first configuration information index, the first configuration information index indicates NTN parameter information corresponding to a cell, and the cell identification information corresponds to the first configuration information index.

Optionally, the first configuration information further includes the carrier frequency information and/or a first configuration information index, the first configuration information index indicates NTN parameter information corresponding to the carrier frequency information, and the carrier frequency information corresponds to the first configuration information index.

Optionally, the transceiver unit 1310 is further configured to receive second configuration information, where the second configuration information includes NTN parameter information, the NTN parameter information includes parameter information needed by the terminal device to perform measurement on the carrier frequency, the second configuration information is used by the terminal device to perform measurement on the carrier frequency within first duration, the first duration is a time length that exceeds validity duration of the first configuration information, and the validity duration is longest time within which the terminal device performs measurement by using the first configuration information.

It should be understood that the transceiver unit 1310 and the processing unit 1320 may further perform another operation performed by the terminal device in any one of the method 300, the method 400, the method 500, and the method 600. Details are not described one by one herein again.

In a design, the apparatus 1300 may be configured to perform an action performed by the network device in the foregoing method embodiments. For example, the apparatus 1300 may be configured to perform an action performed by the network device in the foregoing method 300, 400, 500, or 600. In this case, the apparatus 1300 may be a component of a network device. The transceiver unit 1310 is configured to perform an operation related to receiving and sending on a network device side in the foregoing method embodiments, and the processing unit 1320 is configured to perform a processing-related operation on the network device side in the foregoing method embodiments.

For example, the processing unit 1320 is configured to determine first configuration information based on measurement configuration information, where the first configuration information includes non-terrestrial network NTN parameter information, the NTN parameter information includes parameter information needed by a terminal device to perform measurement on a carrier frequency, and the measurement configuration information indicates configuration information of the measurement to be performed by the terminal device. The transceiver unit 1310 is configured to send the first configuration information and the measurement configuration information, where the first configuration information and the measurement configuration information are used by the terminal device to perform measurement on the carrier frequency, and the measurement configuration information and the first configuration information correspond to a same measurement object.

Optionally, the transceiver unit 1310 is specifically configured to send first information, where the first information includes the first configuration information and the measurement configuration information.

Optionally, the transceiver unit 1310 is specifically configured to send second information, where the second information includes the measurement configuration information and first indication information, the first indication information indicates a location for carrying the first configuration information, and the first indication information is used by the terminal device to determine the first configuration information.

Optionally, the first indication information indicates a system information block and/or index information in which the first configuration information is located in third information.

Optionally, the transceiver unit 1310 is further configured to send the third information, where the third information further includes cell identification information and/or carrier frequency information of a cell.

Optionally, the first configuration information further includes the cell identification information and/or a first configuration information index, the first configuration information index indicates NTN parameter information corresponding to the cell, and the cell identification information corresponds to the first configuration information index.

Optionally, the first configuration information further includes the carrier frequency information and/or a first configuration information index, the first configuration information index indicates NTN parameter information corresponding to the carrier frequency information, and the carrier frequency information corresponds to the first configuration information index.

Optionally, the transceiver unit 1310 is further configured to send second configuration information, where the second configuration information includes NTN parameter information of at least one cell on different carrier frequencies, the NTN parameter information includes parameter information used by the terminal device to access the at least one cell through an NTN, the second configuration information is used by the terminal device to measure the at least one cell within first duration, the first duration is a time length that exceeds validity duration of the first configuration information, and the validity duration is longest time within which the terminal device performs measurement by using the first configuration information.

It should be understood that the transceiver unit 1310 and the processing unit 1320 may further perform another operation performed by the network device in any one of the method 300, the method 400, the method 500, and the method 600. Details are not described one by one herein again.

It should be further understood that the apparatus 1300 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1300 may be specifically the network device in the foregoing embodiments, and may be configured to perform procedures and/or steps corresponding to the network device in the foregoing method embodiments. To avoid repetition, details are not described herein again.

The apparatus 1300 in the foregoing solutions has a function of implementing a corresponding step performed by the device in the foregoing methods, or the apparatus 1300 in the foregoing solutions has a function of implementing a corresponding step performed by the network device in the foregoing methods. The function may be implemented by using hardware, or may be implemented by hardware executing corresponding software. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform receiving and sending operations and a related processing operation in the method embodiments.

In addition, the transceiver unit 1310 may alternatively be a transceiver circuit (for example, the transceiver circuit may include a receiver circuit and a transmitter circuit), and the processing unit may be a processing circuit.

It should be noted that the apparatus in FIG. 13 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

FIG. 14 is a diagram of a communication architecture according to an embodiment of this application. A communication apparatus 1400 shown in FIG. 14 includes a processor 1410, a memory 1420, and a transceiver 1430. The processor 1410 is coupled to the memory 1420, and is configured to execute instructions stored in the memory 1420, to control the transceiver 1430 to send a signal and/or receive a signal.

It should be understood that the processor 1410 and the memory 1420 may be integrated into one processing apparatus. The processor 1410 is configured to execute program code stored in the memory 1420, to implement the foregoing functions. During specific implementation, the memory 1420 may alternatively be integrated into the processor 1410, or may be independent of the processor 1410. It should be understood that the processor 1410 may alternatively correspond to each processing unit in the foregoing communication apparatus, and the transceiver 1430 may correspond to each receiving unit and sending unit in the foregoing communication apparatus.

It should be further understood that the transceiver 1430 may include a receiver (which is also referred to as a receiver) and a transmitter (which is also referred to as a transmitter). The transceiver may further include an antenna. There may be one or more antennas. The transceiver may alternatively be a communication interface or an interface circuit.

Specifically, the communication apparatus 1400 may correspond to the terminal device in the method 300, the method 400, the method 500, or the method 600 according to embodiments of this application. The communication apparatus 1400 may include a unit of a method performed by the network device in the method 300, the method 400, the method 500, or the method 600. It should be understood that a specific process in which the units perform the foregoing corresponding steps has been described in detail in the foregoing method embodiments. For brevity, details are not described herein again.

When the communication apparatus 1400 is a chip, the chip includes an interface unit and a processing unit. The interface unit may be an input/output circuit or a communication interface. The processing unit may be a processor, a microprocessor, or an integrated circuit integrated on the chip.

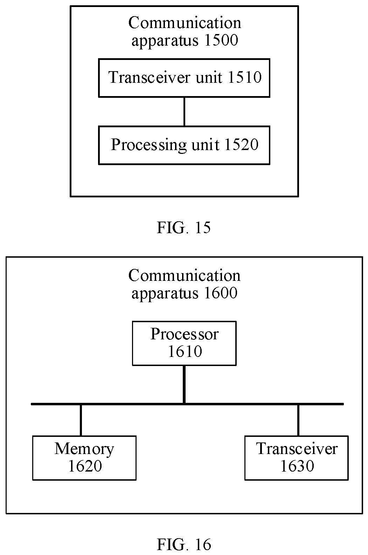

FIG. 15 is a diagram of a structure of another communication apparatus according to an embodiment of this application.

The apparatus 1500 includes a transceiver unit 1510 and a processing unit 1520. The transceiver unit 1510 may be configured to implement a corresponding communication function, and the processing unit 1520 may be configured to perform data processing.

Optionally, the transceiver unit 1510 may also be referred to as a communication interface or a communication unit, and includes a sending unit and/or a receiving unit. The transceiver unit 1510 may be a transceiver (including a transmitter and/or a receiver), an input/output interface (including an input interface and/or an output interface), a pin, a circuit, or the like. The transceiver unit 1510 may be configured to perform a sending step and/or a receiving step in the foregoing method embodiments.

Optionally, the processing unit 1520 may be a processor (which may include one or more processors), a processing circuit having a processor function, or the like, and may be configured to perform a step other than sending and receiving in the foregoing method embodiments.

Optionally, the apparatus 1500 further includes a storage unit. The storage unit may be a memory, an internal storage unit (for example, a register or a cache), an external storage unit (for example, a read-only memory or a random access memory), or the like. The storage unit is configured to store instructions. The processing unit 1520 executes the instructions stored in the storage unit, so that the communication apparatus performs the foregoing methods.

In a design, the apparatus 1500 may be configured to perform an action performed by the network device in the foregoing method embodiments. For example, the apparatus 1500 may be configured to perform an action performed by the first network device in the foregoing method 700, 800, 900, 1000, or 1100. In this case, the apparatus 1500 may be a component of a first network device. The transceiver unit 1510 is configured to perform an operation related to receiving and sending on a network device side in the foregoing method embodiments, and the processing unit 1520 is configured to perform a processing-related operation on the network device side in the foregoing method embodiments.

For example, the processing unit 1520 is configured to determine second configuration information based on first configuration information, where the first configuration information includes a cell-specific parameter of a target cell to be accessed by a terminal device, and the second configuration information includes parameter information used by the terminal device to access the to-be-accessed target cell through a non-terrestrial network NTN. The transceiver unit 1510 is configured to send the first configuration information, the second configuration information, and first information, where the first information indicates the terminal device to receive the first configuration information and the second configuration information, and the first configuration information and the second configuration information are used by the terminal device to access the to-be-accessed target cell.

Optionally, the first information includes a first condition, and the first condition indicates the terminal device to receive the first configuration information and the second configuration information.

Optionally, the first condition is that a current moment of the terminal device is prior to a first start moment, the first start moment is a start moment of a first time period, and the first time period is a time period in which the terminal device switches from a current serving cell of the first network device to the to-be-accessed target cell.

Optionally, the first condition is that a difference between a first offset value and a distance between the terminal device and a first reference point is greater than a first threshold or that a sum of a second offset value and a distance between the terminal device and a second reference point is less than a second threshold, the first reference point is a location within coverage of a current serving cell of the terminal device, the current serving cell is a cell within coverage of the network device, the second reference point is a location within coverage of the target cell to be accessed by the terminal device, the first offset value and the second offset value are hysteresis parameters, and the hysteresis parameter is a maximum value of an allowed error.

Optionally, the first information includes first indication information, and the first indication information indicates the terminal device to receive the first configuration information and the second configuration information.

Optionally, the first information includes first time information, the first time information indicates time at/within which the network device sends the first configuration information and time at/within which the network device sends the second configuration information, the first time information is used by the terminal device to receive the first configuration information at/within the time at/within which the network device sends the first configuration information and receive the second configuration information at/within the time at/within which the network device sends the second configuration information.

It should be understood that the transceiver unit 1510 and the processing unit 1520 may further perform another operation performed by the network device in any one of the method 700, the method 800, the method 900, the method 1000, and the method 1100. Details are not described one by one herein again.

In a design, the apparatus 1500 may be configured to perform an action performed by the terminal device in the foregoing method embodiments. For example, the apparatus 1500 may be configured to perform an action performed by the terminal device in the foregoing method 700, 800, 900, 1000, or 1100. In this case, the apparatus 1500 may be a component of a terminal device. The transceiver unit 1510 is configured to perform an operation related to receiving and sending on a terminal device side in the foregoing method embodiments, and the processing unit 1520 is configured to perform a processing-related operation on the terminal device side in the foregoing method embodiments.

For example, the transceiver unit 1510 is configured to receive first information. The transceiver unit 1510 is further configured to receive first configuration information and second configuration information based on the first information, where the first configuration information includes a cell-specific parameter of a target cell to be accessed by the terminal device, the second configuration information includes parameter information used by the terminal device to access the to-be-accessed target cell through a non-terrestrial network NTN, and the first configuration information and the second configuration information are used by the terminal device to access the to-be-accessed target cell.

Optionally, the processing unit 1520 is configured to determine a first condition based on the first information. The transceiver unit 1510 specifically determines, based on the first condition, to receive the first configuration information and the second configuration information.

Optionally, the processing unit 1520 is specifically configured to determine that the first condition is that a current moment of the terminal device is prior to a start moment of a first time period, where the first time period is a time period in which the terminal device switches from a current serving cell of a first network device to the to-be-accessed target cell. The transceiver unit 1510 is specifically configured to receive the first configuration information and the second configuration information at the current moment.

Optionally, the processing unit 1520 is specifically configured to determine that the first condition is that a difference between a first offset value and a distance between the terminal device and a first reference point is greater than a first threshold or that a sum of a second offset value and a distance between the terminal device and a second reference point is less than a second threshold, where the first reference point is a location within coverage of a current serving cell of the terminal device, the current serving cell is a cell within coverage of a network device, the second reference point is a location within coverage of the target cell to be accessed by the terminal device, the first offset value and the second offset value are hysteresis parameters, and the hysteresis parameter is a maximum value of an allowed error. The transceiver unit 1510 is specifically configured to receive the first configuration information and the second configuration information at a current location.

Optionally, the processing unit 1520 is further configured to determine first indication information based on the first information. The transceiver unit 1510 is specifically configured to receive the first configuration information and the second configuration information based on the first indication information.

Optionally, the processing unit 1520 is further configured to determine first time information based on the first information, where the first time information indicates time at/within which a network device sends the first configuration information and time at/within which the network device sends the second configuration information. The transceiver unit 1510 is specifically configured to: receive the first configuration information at/within the time at/within which the network device sends the first configuration information, and receive the second configuration information at/within the time at/within which the network device sends the second configuration information.

Optionally, the processing unit 1520 is further configured to switch to the target cell based on the first configuration information and the second configuration information.

It should be understood that the transceiver unit 1510 and the processing unit 1520 may further perform another operation performed by the terminal device in any one of the method 700, the method 800, the method 900, the method 1000, and the method 1100. Details are not described one by one herein again.

In a design, the apparatus 1500 may be configured to perform an action performed by the network device in the foregoing method embodiments. For example, the apparatus 1500 may be configured to perform an action performed by the first network device in the foregoing method 1200. In this case, the apparatus 1500 may be a component of a first network device. The transceiver unit 1510 is configured to perform an operation related to receiving and sending on a network device side in the foregoing method embodiments, and the processing unit 1520 is configured to perform a processing-related operation on the network device side in the foregoing method embodiments.

For example, the transceiver unit 1510 is configured to send a first message, where the first message includes group identification information, and the group identification information indicates a group to which terminal devices belong.

The transceiver unit 1510 is further configured to send, to the terminal devices in a multicast manner, first configuration information and second configuration information that correspond to the group to which the terminal devices belong, where the first configuration information includes a cell-specific parameter of a target cell to be accessed by the terminal devices, the second configuration information includes parameter information used by the terminal devices to access the to-be-accessed target cell through a non-terrestrial network NTN, and the first configuration information and the second configuration information are used by the terminal devices to access the to-be-accessed target cell.

Optionally, the transceiver unit 1510 is further configured to send third configuration information, where the third configuration information includes a handover trigger condition, and the handover trigger condition indicates the terminal devices to switch to the target cell.

Optionally, the third configuration information further includes identification information of the target cell.

Optionally, the group identification information is a group radio network temporary identifier.

It should be understood that the transceiver unit 1510 and the processing unit 1520 may further perform another operation performed by the network device in the foregoing method 1200. Details are not described one by one herein again.

In a design, the apparatus 1500 may be configured to perform an action performed by the terminal device in the foregoing method embodiments. For example, the apparatus 1500 may be configured to perform an action performed by the terminal device in the foregoing method 1200. In this case, the apparatus 1500 may be a component of a terminal device. The transceiver unit 1510 is configured to perform an operation related to receiving and sending on a terminal device side in the foregoing method embodiments, and the processing unit 1520 is configured to perform a processing-related operation on the terminal device side in the foregoing method embodiments.

For example, the transceiver unit 1510 is configured to receive a first message, where the first message includes group identification information, and the group identification information indicates a group to which the terminal device belongs. The transceiver unit 1510 is further configured to receive first configuration information and second configuration information that correspond to the group to which the terminal device belongs, where the first configuration information includes a cell-specific parameter of a target cell to be accessed by the terminal device, the second configuration information includes parameter information used by the terminal device to access the to-be-accessed target cell through a non-terrestrial network NTN, and the first configuration information and the second configuration information are used by the terminal device to access the to-be-accessed target cell.

Optionally, the transceiver unit 1510 is further configured to receive third configuration information, where the third configuration information includes a handover trigger condition. The processing unit 1520 is configured to switch to the target cell based on the handover trigger condition.

Optionally, the third configuration information further includes identification information of the target cell.

Optionally, the group identification information is a group radio network temporary identifier.

It should be understood that the transceiver unit 1510 and the processing unit 1520 may further perform another operation performed by the terminal device in the foregoing method 1200. Details are not described one by one herein again.

It should be understood that the apparatus 1500 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1500 may be specifically the network device in the foregoing embodiments, and may be configured to perform procedures and/or steps corresponding to the network device in the foregoing method embodiments. To avoid repetition, details are not described herein again.

The apparatus 1500 in the foregoing solutions has a function of implementing a corresponding step performed by the device in the foregoing methods, or the apparatus 1500 in the foregoing solutions has a function of implementing a corresponding step performed by the network device in the foregoing methods. The function may be implemented by using hardware, or may be implemented by hardware executing corresponding software. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform receiving and sending operations and a related processing operation in the method embodiments.

In addition, the transceiver unit 1510 may alternatively be a transceiver circuit (for example, the transceiver circuit may include a receiver circuit and a transmitter circuit), and the processing unit may be a processing circuit.

It should be noted that the apparatus in FIG. 15 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

FIG. 16 is a diagram of a communication architecture according to an embodiment of this application. A communication apparatus 1600 shown in FIG. 16 includes a processor 1610, a memory 1620, and a transceiver 1630. The processor 1610 is coupled to the memory 1620, and is configured to execute instructions stored in the memory 1620, to control the transceiver 1630 to send a signal and/or receive a signal.

It should be understood that the processor 1610 and the memory 1620 may be integrated into one processing apparatus. The processor 1610 is configured to execute program code stored in the memory 1620, to implement the foregoing functions. During specific implementation, the memory 1620 may alternatively be integrated into the processor 1610, or may be independent of the processor 1610. It should be understood that the processor 1610 may alternatively correspond to each processing unit in the foregoing communication apparatus, and the transceiver 1630 may correspond to each receiving unit and sending unit in the foregoing communication apparatus.

It should be further understood that the transceiver 1630 may include a receiver (which is also referred to as a receiver) and a transmitter (which is also referred to as a transmitter). The transceiver may further include an antenna. There may be one or more antennas. The transceiver may alternatively be a communication interface or an interface circuit.

Specifically, the communication apparatus 1600 may correspond to the terminal device in the method 700, the method 800, the method 900, the method 1000, the method 1100, or the method 1200 according to embodiments of this application. The communication apparatus 1600 may include a unit of a method performed by the network device in the method 700, the method 800, the method 900, the method 1000, the method 1100, or the method 1200. It should be understood that a specific process in which the units perform the foregoing corresponding steps has been described in detail in the foregoing method embodiments. For brevity, details are not described herein again.

When the communication apparatus 1600 is a chip, the chip includes an interface unit and a processing unit. The interface unit may be an input/output circuit or a communication interface. The processing unit may be a processor, a microprocessor, or an integrated circuit integrated on the chip.

In an implementation process, the steps in the foregoing methods may be completed by using an integrated logic circuit of hardware in the processor, or by using instructions in a form of software. The steps in the methods disclosed with reference to embodiments of this application may be directly performed and completed by a hardware processor, or may be performed and completed by using a combination of the hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory, and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed by using an integrated logic circuit of hardware in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory, and completes the steps in the foregoing methods in combination with hardware of the processor.

This application further provides a computer-readable medium. The computer-readable medium stores a computer program. When the computer program is executed by a computer, the function in any one of the foregoing method embodiments is implemented.

This application further provides a computer program product. When the computer program product is executed by a computer, the function in any one of the foregoing method embodiments is implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

In embodiments of this application, the term such as "example" or "for example" is for representing giving an example, an illustration, or descriptions. Any embodiment or design scheme described as an "example" in this application should not be explained as being more preferred or having more advantages than another embodiment or design scheme. Exactly, the term "example" is used to present a concept in a specific manner.

It should be understood that "an embodiment" mentioned in the whole specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that, in various embodiments of this application, sequence numbers of the foregoing processes do not mean an execution sequence. The execution sequence of the processes should be determined based on functions and internal logic of the processes, and should not constitute any limitation on an implementation process of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that the UE or the base station performs corresponding processing in an objective situation, and are not intended to limit time, and the UE or the base station is not necessarily required to have a determining action during implementation, and do not mean other limitation.

In addition, the terms "system" and "network" are usually used interchangeably in this specification. The term "and/or" in this specification describes only an association relationship between associated objects and represents that three relationships may exist. For example, A and/or B may represent the following three cases: Only A exists, both A and B exist, and only B exists.

The term "at least one of ..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A, that is, B may also be determined based on A and/or other information. The terms "include", "contain", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, with reference to the units and algorithm steps in the examples described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a terminal device, first configuration information, wherein the first configuration information comprises non-terrestrial network NTN parameter information, and the NTN parameter information comprises parameter information needed by the terminal device to perform measurement on a carrier frequency; and
performing, by the terminal device, measurement on the carrier frequency based on the first configuration information and measurement configuration information, wherein the measurement configuration information indicates configuration information of the measurement to be performed by the terminal device, and the measurement configuration information and the first configuration information correspond to a same measurement object.

2. The method according to claim 1, wherein the obtaining, by a terminal device, first configuration information comprises:
receiving, by the terminal device, first information, wherein the first information comprises the first configuration information and the measurement configuration information.

3. The method according to claim 1, wherein the obtaining, by a terminal device, first configuration information comprises:
receiving, by the terminal device, second information, wherein the second information comprises the measurement configuration information and first indication information, and the first indication information indicates a location for carrying the first configuration information; and
determining, by the terminal device, the first configuration information based on the first indication information.

4. The method according to claim 3, wherein the determining, by the terminal device, the first configuration information based on the first indication information comprises:
determining, by the terminal device based on the first indication information, a system information block and/or index information in which the first configuration information is located; and
determining, by the terminal device, the first configuration information in third information based on the system information block and/or the index information, wherein the third information comprises the first configuration information.

5. The method according to claim 4, wherein the method further comprises:
receiving, by the terminal device, the third information, wherein the third information further comprises carrier frequency information and/or cell identification information.

6. The method according to any one of claims 1 to 5, wherein the first configuration information further comprises the cell identification information and/or a first configuration information index, the first configuration information index indicates NTN parameter information corresponding to a cell, and the cell identification information corresponds to the first configuration information index.

7. The method according to any one of claims 1 to 5, wherein the first configuration information further comprises the carrier frequency information and/or a first configuration information index, the first configuration information index indicates NTN parameter information corresponding to the carrier frequency information, and the carrier frequency information corresponds to the first configuration information index.

8. The method according to any one of claims 1 to 7, wherein the method further comprises:
receiving, by the terminal device, second configuration information, wherein the second configuration information comprises NTN parameter information, the NTN parameter information comprises parameter information needed by the terminal device to perform measurement on the carrier frequency, the second configuration information is used by the terminal device to perform measurement on the carrier frequency within first duration, the first duration is a time length that exceeds validity duration of the first configuration information, and the validity duration is longest time within which the terminal device performs measurement by using the first configuration information.

9. A communication method, comprising:
determining, by a network device, first configuration information based on measurement configuration information, wherein the first configuration information comprises non-terrestrial network NTN parameter information, the NTN parameter information comprises parameter information needed by a terminal device to perform measurement on a carrier frequency, and the measurement configuration information indicates configuration information of the measurement to be performed by the terminal device; and
sending, by the network device, the first configuration information and the measurement configuration information, wherein the first configuration information and the measurement configuration information are used by the terminal device to perform measurement on the carrier frequency, and the measurement configuration information and the first configuration information correspond to a same measurement object.

10. The method according to claim 9, wherein the sending, by the network device, the first configuration information comprises:
sending, by the network device, first information, wherein the first information comprises the first configuration information and the measurement configuration information.

11. The method according to claim 9, wherein the sending, by the network device, the first configuration information comprises:
sending, by the network device, second information, wherein the second information comprises the measurement configuration information and first indication information, the first indication information indicates a location for carrying the first configuration information, and the first indication information is used by the terminal device to determine the first configuration information.

12. The method according to claim 11, wherein the first indication information indicates a system information block and/or index information in which the first configuration information is located in third information.

13. The method according to claim 12, wherein the method further comprises: sending, by the network device, the third information, wherein the third information further comprises cell identification information and/or carrier frequency information of a cell.

14. The method according to any one of claims 9 to 13, wherein the first configuration information further comprises the cell identification information and/or a first configuration information index, the first configuration information index indicates NTN parameter information corresponding to the cell, and the cell identification information corresponds to the first configuration information index.

15. The method according to any one of claims 9 to 13, wherein the first configuration information further comprises the carrier frequency information and/or a first configuration information index, the first configuration information index indicates NTN parameter information corresponding to the carrier frequency information, and the carrier frequency information corresponds to the first configuration information index.

16. The method according to any one of claims 9 to 15, wherein the method further comprises:
sending, by the network device, second configuration information, wherein the second configuration information comprises NTN parameter information of at least one cell on the carrier frequency, the NTN parameter information comprises parameter information used by the terminal device to access the at least one cell through an NTN, the second configuration information is used by the terminal device to measure the at least one cell within first duration, the first duration is a time length that exceeds validity duration of the first configuration information, and the validity duration is longest time within which the terminal device performs measurement by using the first configuration information.

17. A communication method, comprising:
determining, by a first network device, second configuration information based on first configuration information, wherein the first configuration information comprises a cell-specific parameter of a target cell to be accessed by a terminal device, and the second configuration information comprises parameter information used by the terminal device to access the to-be-accessed target cell through a non-terrestrial network NTN; and
sending, by the network device, the first configuration information, the second configuration information, and first information, wherein the first information indicates the terminal device to receive the first configuration information and the second configuration information, and the first configuration information and the second configuration information are used by the terminal device to access the to-be-accessed target cell.

18. The method according to claim 17, wherein the first information comprises a first condition, and the first condition indicates the terminal device to receive the first configuration information and the second configuration information.

19. The method according to claim 18, wherein the first condition is that a current moment of the terminal device is prior to a first start moment, the first start moment is a start moment of a first time period, and the first time period is a time period in which the terminal device switches from a current serving cell of the network device to the to-be-accessed target cell.

20. The method according to claim 18, wherein the first condition is that a difference between a first offset value and a distance between the terminal device and a first reference point is greater than a first threshold or that a sum of a second offset value and a distance between the terminal device and a second reference point is less than a second threshold, the first reference point is a location within coverage of a current serving cell of the terminal device, the current serving cell is a cell within coverage of the network device, and the second reference point is a location within coverage of the target cell to be accessed by the terminal device.

21. The method according to claim 17, wherein the first information comprises first indication information, and the first indication information indicates the terminal device to receive the first configuration information and the second configuration information.

22. The method according to claim 17, wherein the first information comprises first time information, the first time information indicates time at/within which the network device sends the first configuration information and time at/within which the network device sends the second configuration information, the first time information is used by the terminal device to receive the first configuration information at/within the time at/within which the network device sends the first configuration information and receive the second configuration information at/within the time at/within which the network device sends the second configuration information.

23. A communication method, comprising:
receiving, by a terminal device, first information; and
receiving, by the terminal device, first configuration information and second configuration information based on the first information, wherein the first configuration information comprises a cell-specific parameter of a target cell to be accessed by the terminal device, the second configuration information comprises parameter information used by the terminal device to access the to-be-accessed target cell through a non-terrestrial network NTN, and the first configuration information and the second configuration information are used by the terminal device to access the to-be-accessed target cell.

24. The method according to claim 23, wherein the receiving, by the terminal device, first configuration information and second configuration information based on the first information comprises:
determining, by the terminal device, a first condition based on the first information; and
determining, by the terminal device based on the first condition, to receive the first configuration information and the second configuration information.

25. The method according to claim 24, wherein the determining, by the terminal device based on the first condition, to receive the first configuration information and the second configuration information comprises:
determining, by the terminal device, that the first condition is that a current moment of the terminal device is prior to a start moment of a first time period, wherein the first time period is a time period in which the terminal device switches from a current serving cell of a network device to the to-be-accessed target cell; and
receiving, by the terminal device, the first configuration information and the second configuration information at the current moment.

26. The method according to claim 24, wherein the determining, by the terminal device based on the first condition, to receive the first configuration information and the second configuration information comprises:
determining, by the terminal device, that the first condition is that a difference between a first offset value and a distance between the terminal device and a first reference point is greater than a first threshold or that a sum of a second offset value and a distance between the terminal device and a second reference point is less than a second threshold, wherein the first reference point is a location within coverage of a current serving cell of the terminal device, the current serving cell is a cell within coverage of a network device, and the second reference point is a location within coverage of the target cell to be accessed by the terminal device; and
receiving, by the terminal device, the first configuration information and the second configuration information at a current location.

27. The method according to claim 23, wherein the receiving, by the terminal device, first configuration information and second configuration information based on the first information comprises:
determining, by the terminal device, first indication information based on the first information; and
receiving, by the terminal device, the first configuration information and the second configuration information based on the first indication information.

28. The method according to claim 23, wherein the receiving, by the terminal device, first configuration information and second configuration information based on the first information comprises:
determining, by the terminal device, first time information based on the first information, wherein the first time information indicates time at/within which a network device sends the first configuration information and time at/within which the network device sends the second configuration information; and
receiving, by the terminal device, the first configuration information at/within the time at/within which the network device sends the first configuration information, and receiving the second configuration information at/within the time at/within which the network device sends the second configuration information.

29. The method according to any one of claims 23 to 28, wherein the method further comprises:
switching, by the terminal device, to the target cell based on the first configuration information and the second configuration information.

30. A communication method, comprising:
sending, by a network device, a first message, wherein the first message comprises group identification information, and the group identification information indicates a group to which terminal devices belong; and
sending, by the network device to the terminal devices in a multicast manner, first configuration information and second configuration information that correspond to the group to which the terminal devices belong, wherein the first configuration information comprises a cell-specific parameter of a target cell to be accessed by the terminal devices, the second configuration information comprises parameter information used by the terminal devices to access the to-be-accessed target cell through a non-terrestrial network NTN, and the first configuration information and the second configuration information are used by the terminal devices to access the to-be-accessed target cell.

31. The method according to claim 30, wherein the method further comprises: sending, by the network device, third configuration information, wherein the third configuration information comprises a handover trigger condition, and the handover trigger condition indicates the terminal devices to switch to the target cell.

32. The method according to claim 31, wherein the third configuration information further comprises identification information of the target cell.

33. The method according to any one of claims 30 to 32, wherein the group identification information is a group radio network temporary identifier.

34. A communication method, comprising:
receiving, by a terminal device, a first message, wherein the first message comprises group identification information, and the group identification information indicates a group to which the terminal device belongs; and
receiving, by the terminal device, first configuration information and second configuration information that correspond to the group to which the terminal device belongs, wherein the first configuration information comprises a cell-specific parameter of a target cell to be accessed by the terminal device, the second configuration information comprises parameter information used by the terminal device to access the to-be-accessed target cell through a non-terrestrial network NTN, and the first configuration information and the second configuration information are used by the terminal device to access the to-be-accessed target cell.

35. The method according to claim 34, wherein the method further comprises:
receiving, by the terminal device, third configuration information, wherein the third configuration information comprises a handover trigger condition; and
switching, by the terminal device, to the target cell based on the handover trigger condition.

36. The method according to claim 35, wherein the third configuration information further comprises identification information of the target cell.

37. The method according to any one of claims 34 to 36, wherein the group identification information is a group radio network temporary identifier.

38. A communication apparatus, comprising a unit configured to perform the method according to any one of claims 1 to 16, 17 to 29, or 30 to 37.

39. A communication apparatus, comprising a processor and an interface circuit, wherein the interface circuit is configured to: receive computer code or instructions, and transmit the computer code or the instructions to the processor, and the processor runs the computer code or the instructions, to enable the method according to any one of claims 1 to 16, the method according to any one of claims 17 to 29, or the method according to any one of claims 30 to 37 to be performed.

40. A communication apparatus, comprising at least one processor, wherein the at least one processor is coupled to at least one memory, and the at least one processor is configured to execute a computer program or instructions stored in the at least one memory, to enable the method according to any one of claims 1 to 16, the method according to any one of claims 17 to 29, or the method according to any one of claims 30 to 37 to be performed.

41. A computer-readable storage medium, wherein the computer-readable storage medium stores computer instructions; and when the computer instructions are run on a computer, the method according to any one of claims 1 to 16, the method according to any one of claims 17 to 29, or the method according to any one of claims 30 to 37 is performed.

42. A computer program product, wherein when the computer program product runs on a computer, the computer is enabled to perform a step in the method according to any one of claims 1 to 16, a step in the method according to any one of claims 17 to 29, or a step in the method according to any one of claims 30 to 37.
